# EUROPÄISCHE PATENTSCHRIFT

(11) **EP 1 737 766 B1**
(45) Veröffentlichungstag und Bekanntmachung des Hinweises auf die Patenterteilung: **12.09.2007**
(21) Anmeldenummer: 05714164.0
(22) Anmeldetag: 09.03.2005
(51) Int. Cl.: B65G 1/137

(54) **VORRICHTUNG UND VERFAHREN ZUR BEREITSTELLUNG VON STAPELBAREN WAREN**
DEVICE AND METHOD FOR SUPPLYING STACKABLE GOODS
DISPOSITIF ET PROCEDE D'APPROVISIONNEMENT DE PRODUITS EMPILABLES

(30) Priorität: 18.03.2004 AT 4822004
(43) Veröffentlichungstag der Anmeldung: 03.01.2007
(73) Patentinhaber: TGW Transportgeräte GmbH, 4600 Wels (AT); Klug GmbH Integrierte Systeme, 92552 Teunz (DE)
(72) Erfinder: HANSL, Rudolf, 4020 Linz (AT); KLUG, Dieter, 93492 Treffelstein (DE)
(74) Vertreter: Secklehner, Günter
(86) Internationale Anmeldenummer: PCT/AT2005/000082
(87) Internationale Veröffentlichungsnummer: WO 2005/087625

(56) Entgegenhaltungen:
- DE-A1- 2 736 197
- DE-A1- 19 745 813

## Beschreibung

Die Erfindung betrifft eine Vorrichtung und ein Verfahren zur Bereitstellung von stapelbaren Waren in schachtartigen Vorratsmagazinen wenigstens einer Speichereinrichtung und Überwachung des Füllstandes in den Vorratsmagazinen mittels einer Erfassungseinrichtung, wie in den Oberbegriffen der Ansprüche 1 und 19 beschrieben.

Aus der US 5,755,552 A ist eine gattungsgemäße Vorrichtung zur Bereitstellung von stapelbaren Waren bekannt, die beidseits zu einer Fördereinrichtung angeordnete Speichereinrichtungen umfasst. Die Speichereinrichtungen sind durch in Längsrichtung der Fördereinrichtung hintereinander angeordnete, schachtartige Vorratsmagazine zur Aufnahme unterschiedlicher Waren ausgebildet und sind am unteren Ende eines jeden Vorratsmagazins, von einem Rechnersystem gesteuerte Abgabevorrichtungen vorgesehen. Die Vorratsmagazine sind jeweils mit einem ortsfesten Sensor zur Überwachung eines Füllstandes ausgestattet, der ein Signal an eine Bedieneinheit abgibt, sobald der Stapel einen Mindestfüllstand unterschreitet, woraufhin eine Bedienperson das Vorratsmagazin mit Waren manuell beschickt.

Die Kommissionierung der Waren kann auf zwei unterschiedliche Arten erfolgen. Nach einer ersten Ausführung, wie sie in der DE 33 48 171 C beschrieben ist, werden auf dem Förderband abgestellte, zu kommissionierende Warenträger, insbesondere Transportbehälter, an einer Vielzahl von beidseitig des Bandförderers angeordneten Vorratsmagazinen vorbeitransportiert und während des Vorbeitransportes an den Vorratsmagazinen nach Vorgabe eines Auftrags mit unterschiedlichen Waren beladen.

Nach einer anderen Ausführung, wie sie in der DE 42 25 041 A beschrieben ist, werden im Gegensatz dazu keine zu kommissionierende Warenträger eingesetzt, sondern es werden die einzelnen Waren unmittelbar auf das unterhalb von Vorratsmagazinen einer Speichereinrichtung vorbeilaufende Förderband zu einem Auftrag zusammengefasst, abgelegt. Die einzelnen Aufträge werden auf ein am Abgabeende des ersten Förderbandes vorbeiführendes, zweites Förderband aufgegeben und von dort in auftragsgebundene Warenträger abgeschoben.

Auch ist es vorgesehen, dass die einzelnen Vorratsmagazine automatisch abfragbare Füllstandsanzeigen aufweisen, sodass dem Bedienpersonal der Anlage ein Signal gegeben werden kann, welches Vorratsmagazin wieder nachgefüllt werden muss. Dazu wird ein Schalter oder eine Lichtschranke an jedem Vorratsmagazin angeordnet, der ein Signal an eine Bedieneinheit abgibt, sobald der Stapel einen Mindestfüllstand unterschreitet. Das Rechnersystem, welches bei jeder Abgabe einer Ware mitzählt, kann dann einen Abgleich zwischen der ihr bekannten Zählung und der Höhe des verbleibenden Stapels durchführen.

Eine andere Ausführung einer Füllstandsanzeige ist aus der DE 35 33 382 A1 bekannt, bei der am oberen und unteren Ende jedes Vorratsmagazins eine Zähleinrichtung für die in das Vorratsmagazin eingegeben Waren und für die vom Vorratsmagazin abgegeben Waren angeordnet ist. Mit diesen Zähleinrichtungen zählt man die jeweils zugegebenen bzw. abgegebenen Waren und das Rechnersystem kennt dann den Istbestand, daher die Anzahl an Waren im Vorratsmagazin. Über die Bedieneinheit kann nun angezeigt werden, ob in dem betreffenden Vorratsmagazin noch ein ausreichender Vorrat an Waren vorhanden ist oder ob die Gefahr besteht, dass diese Waren in Kürze alle abgegeben sind, sodass die Waren nachgefüllt werden müssen.

Da diese bekannten Kommissionieranlagen oftmals bis zu mehrere Hunderte Vorratsmagazine umfassen können, ist, um den Füllstand in einem jeden Vorratsmagazin zuverlässig überwachen zu können, ein hoher schaltungstechnischer Aufwand zwangsweise erforderlich.

Der weitaus größere Nachteil der bekannten Füllstandsüberwachungssysteme besteht aber darin, dass die Bedienperson immer nur jene Vorratsmagazine wahllos auffüllt, an denen gerade eine Bedarfsmeldung zum Nachfüllen der Vorratsmagazine in Form eines Alarms ausgegeben wird, wobei der Bedienperson zu diesem Zeitpunkt nicht bekannt ist, welche Vorratsmagazine unbedingt nachzufüllen sind. Dadurch kann nicht sichergestellt werden, dass die Bedienperson vorrangig (prioritätsbezogen) jene Vorratsmagazine auffüllt, in denen ein ausreichender Bestand an zu kommissionierenden Waren enthalten sein muss, um einen Auftrag oder nachfolgende Aufträge korrekt erfüllen zu können.

Weiters ist aus der DE 27 36 197 A1 ein elektronisch gesteuerter Kommissionierautomat bekannt, der eine Speichereinrichtung mit mehreren vertikal nebeneinander angeordneten, schachtartigen Vorratsmagazinen umfasst. Die Beschickung der Vorratsmagazine erfolgt über ein Fördersystem automatisiert. Die Vorratsmagazine sind jeweils mit Sensoren versehen, mittels der ein Istbestand an Waren erfasst, darauf folgend der Istbestand an Waren mit einem für einen Auftrag benötigten Sollbestand an Waren verglichen und der Istbestand an Waren abgestimmt wird. Die Vorratsmagazine sind nur mit einer solchen Menge an Waren befüllt, wie sie für die Abarbeitung des Auftrags notwendig sind, sodass mit einer wirtschaftlichen Losgröße gefertigt werden kann.

Ein elektronisch gesteuerter Kommissionierautomat ist auch aus der DE 27 36 197 A1 bekannt, der eine Speichereinrichtung mit mehreren vertikal nebeneinander angeordneten, schachtartigen Vorratsmagazinen umfasst. Die Beschickung der Vorratsmagazine erfolgt über ein Fördersystem automatisiert. Die Vorratsmagazine sind jeweils mit ortsfesten Sensoren versehen, mittels der ein Istbestand an Waren erfasst, darauffolgend der Istbestand an Waren mit einem für einen Auftrag benötigten Sollbestand an Waren verglichen und der Istbestand an Waren abgestimmt wird. Die Vorratsmagazine sind nur mit einer solchen Menge an Waren befüllt, wie sie für die Abarbeitung des Auftrags notwendig sind, sodass mit einer wirtschaftlichen Losgröße gefertigt werden kann.

Schließlich ist aus der DE 197 45 813 A eine Vorrichtung und ein Verfahren zur Bestimmung des Füllstandes von Waren in einem Vorratsmagazin eines Verkaufsautomaten bekannt, wo im Vorratsmagazin eine Messskala, insbesondere ein Barcode, angeordnet ist. Die Messskala ist durch die Waren bis zu einem aktuellen Füllstand verdeckt und der dem aktuellen Füllstand entsprechende Lesebereich der Messskala, ist mit einem opto-elektronischen Lesegerät, insbesondere einem Barcode-Lesegerät, abtastbar. Das Lesegerät ordnet die individuellen Abmessungen einer Ware einem Vorratsmagazin zu, wodurch aus der Höhe des Füllstandes die Anzahl der Waren im Vorratsmagazin berechenbar ist.

Aufgabe der Erfindung ist es eine Vorrichtung und ein Verfahren zur Bereitstellung von stapelbaren Waren und Überwachung des Füllstandes in Vorratsmagazinen zu schaffen, die sich durch ihre einfache Steuerung und ihren zuverlässigen Betrieb auszeichnet und die eine koordinierte Beschickung der Vorratsmagazine mit Waren erlauben.

Die Aufgabe der Erfindung wird durch die im Kennzeichenteil des Anspruches 1 wiedergegebenen Merkmale gelöst. Von Vorteil dabei ist, dass die Messeinrichtung an einem oberhalb der Speichereinrichtung in Längsrichtung derselben zwischen den einzelnen Vorratsmagazinen geführt verfahrbaren Stellwagen angeordnet ist und deshalb über nur eine Messeinrichtung je Speichereinrichtung, die Distanz zwischen der obersten Ware und einer oberen Füllstandbegrenzung eines Vorratsmagazins erfasst und der Füllstand im jeweiligen Vorratsmagazin ermittelt werden kann. Dadurch kann der hohe schaltungstechnische Aufwand, wie er durch die bekannte Anordnung von Messeinrichtungen an einem jeden Vorratsmagazin gegeben ist, vermieden, die Kosten für die gesamte Vorrichtung reduziert und ein zuverlässiger Betrieb erreicht werden.

Von Vorteil sind auch die Ausbildungen nach den Ansprüchen.2 und 3, wodurch der Stellwagen entlang der Führungsbahn spielarm geführt ist und deshalb eine zuverlässige Messung der Distanz zwischen der in einem Vorratsmagazin bereitgestellten, obersten Ware und einer vorgegebenen, oberen Füllstandsbegrenzung erreicht wird.

Eine vorteilhafte Ausgestaltung der Antriebsvorrichtung ist im Anspruch 4 beschrieben.

Vorteilhafte Ausbildungen von Messeinrichtungen sind in den Ansprüchen 5 bis 7 beschrieben. Diese zeichnen sich vor allem wegen ihrer hohen Messgenauigkeit und kurzen Ansprechzeiten aus.

Die Ausgestaltungen nach den Ansprüchen 8 bis 11 ermöglichen einerseits die exakte Positionierung des Stellwagens gegenüber den einzelnen Vorratsmagazinen und andererseits die Erfassung seiner aktuellen Istposition, wodurch eine genaue Zuordnung eines erfassten, vorzugsweise elektrischen Messsignals, respektive einer Distanz zur Bestimmung des Füllstandes zu dem jeweiligen Vorratsmagazin möglich ist.

Vorteilhafte Ausgestaltungen der Erfindung sind in den Ansprüchen 12 und 13 beschrieben, da mit dieser Anordnung der Speichereinrichtungen und der Fördereinrichtung eine Kommissionierung von unterschiedlichsten Waren nach vorgegebenen Aufträgen auf einfache Art und Weise erfolgen kann.

Vorteilhaft ist auch die Ausgestaltung nach Anspruch 14, da durch die Neigung der Führungsprofile zur Mitte der Fördereinrichtung hin, bei minimalem Platzbedarf die Zugänglichkeit zu den Vorratsmagazinen und ein manuelles Beladen der Vorratsmagazine wesentlich erleichtert werden. Durch die doppelt geneigte Anordnung der Führungsprofile kann auf eine allseitige Führung der Waren in den Vorratsmagazinen verzichtet werden. Damit entfällt dann aber auch die Notwendigkeit, die Größe der Vorratsmagazine auf die Größe der jeweiligen Waren abzustimmen.

Die Fortbildung nach Anspruch 15 ist von Vorteil, da die erfindungsgemäße Vorrichtung aus dem Tragrahmen, die Führungsbahn und den modulartig auswechselbaren Vorratsmagazinen zusammengesetzt ist und die die Vorratsmagazine bildenden Führungsprofile eine zweckmäßig über die gesamte Länge derselben erstreckende Warennachfüllöffnung ausbilden, über die von einer Bedienperson eine einfache manuelle Beschickung der Vorratsmagazine vorgenommen werden kann.

Eine weitere vorteilhafte Ausbildung der Erfindung ist im Anspruch 16 beschrieben. Demnach können die Messsignale für die Distanz an eine Steuereinheit vom Rechnersystem oder an eine Bedieneinheit zur weiteren Verarbeitung/Auswertung übermittelt werden.

Gemäß Anspruch 17 ist von Vorteil, dass der Bedienperson Informationen an der Ausgabevorrichtung bekannt gegebenen werden können, beispielsweise welche Vorratsmagazine nachzufüllen sind, welche aktuelle Anzahl an Waren (Istbestand) im jeweiligen Vorratsmagazin enthalten ist, welche Type (Sorte) von Ware im jeweiligen Vorratsmagazin bereitgestellt sind, wie viele Waren aufgrund der eingegebenen Aufträge/prognostizierten Absatzmenge innerhalb eines gesetzten Zeitfensters bzw. Zeitraumes noch angefordert werden, wann ein Vorratsmagazin nachgefüllt werden muss und dgl.. Zusätzlich besteht für die Bedienperson auch die Möglichkeit über die Eingabevorrichtung beispielsweise einen Nachfüllvorgang zu bestätigen oder bei Fehlfunktionen/Störungen der Vorrichtung einen Kommissioniervorgang zu stoppen.

Eine vorteilhafte Ausgestaltung der Erfindung ist auch im Anspruch 18 beschrieben, bei der die Daten und/oder Mess- oder Steuersignale über eine Funk-Übertragung oder Infrarot-Übertragung zwischen der Messeinrichtung und/oder der Steuereinheit und/oder der Bedieneinheit und/oder des wenigstens einen Antriebsmotors berührungslos übertragen werden und deshalb mit einer relativ einfachen Steuerung das Auslangen gefunden werden kann.

Die Aufgabe der Erfindung wird aber auch durch die im Kennzeichenteil des Anspruches 19 wiedergegebenen Maßnahmen gelöst. Der überraschende Vorteil ist, dass gleichzeitig mit der Verstellbewegung vom Stellwagen über bevorzugt nur eine Messeinrichtung je Speichereinrichtung zumindest in einem der Vorratsmagazine die Distanz zwischen der obersten Ware und der maximalen, oberen Füllstandsbegrenzung erfasst und der Füllstand dazu ermittelt werden, wodurch der Steuerungsaufwand insgesamt verringert wird.

Von Vorteil ist aber auch die Maßnahme nach Anspruch 20, da eine Bedarfsmeldung an die Bedienperson nur dann abgegeben wird, wenn der Istbestand an Waren eines Vorratsmagazins zu gering ist und deshalb ein erfasster Auftrag nicht ordnungsgemäß erfüllt werden kann. Mit anderen Worten, wird vorerst vom Rechnersystem überprüft, welche Anzahl (Sollbedarf) von Waren für diesen erfassten Auftrag benötigt wird und verglichen, ob für die Abarbeitung dieses Auftrags das Vorratsmagazin ausreichend befüllt ist. Kann dieser Auftrag nicht erfüllt werden, wird eine Bedarfsmeldung an die Bedienperson abgegeben. Dies geschieht vor oder während der Abarbeitung dieses Auftrages und noch bevor das Vorratsmagazin vollständig geleert wurde, womit ein Stillstand der Vorrichtung ausgeschlossen werden kann. Werden für diesen Auftrag noch ausreichend Waren im Vorratsmagazin bereitgestellt, wird keine Bedarfsmeldung ausgegeben. Dies kann aber bedeuten, dass im Vorratsmagazin nur noch wenige Waren enthalten sind, der Istbestand an Waren aber dennoch ausreichend ist und der Auftrag erfüllt werden kann. Erst nachdem ein weiterer Auftrag zur gleichen Ware eingeht und der Istbestand an Waren nicht ausreicht, wird eine Bedarfsmeldung ausgegeben. Demnach erhält die Bedienperson nur dann eine Bedarfsmeldung, wenn tatsächlich ein Beschickungsvorgang vorzunehmen ist und nicht, wie aus dem Stand der Technik bekannt, sobald eine Mindestfüllmenge unterschritten wird, unabhängig davon, ob überhaupt noch weitere Waren benötigt werden, um diesen und gegebenenfalls einen nachfolgenden Auftrag erledigen zu können. Diese Verknüpfung des ermittelten Istbestands im Vorratsmagazin mit dem Auftrag, führt dazu, dass die Anzahl der Bedarfsmeldungen an die Bedienperson minimal ist und die Bedienperson entlastet wird. Die Bedarfsmeldung kann auch Informationen enthalten, beispielsweise welche Anzahl von Waren für die ordnungsgemäße Erledigung des Auftrags benötigt wird und innerhalb welchem Zeitfenster eine Nachfüllung zu erfolgen hat, ohne dabei eine vollständige Entleerung dieses Vorratsmagazins zu riskieren. Dadurch steht der Bedienperson eine weitere Koordinationsmöglichkeit für die Beschickungsvorgänge offen.

Gemäß der Maßnahme nach Anspruch 21 ist von Vorteil, dass anhand einer prognostizierten Absatzmenge von wenigstens einer Sorte Ware innerhalb eines bestimmten Zeitfensters, der Mengenbedarf dieser Ware erhoben wird und entsprechend diesem Bedarf die Ressourcenplanung an Bedienpersonen vorgenommen werden kann. Die Ausgangswerte für die prognostizierte Absatzmenge einer Ware, kann anhand von statistischen Auswertungen bzw. Erfahrungswerten ermittelt und in das Rechnersystem als quantitative Menge eingegeben werden.

Die Maßnahme nach Anspruch 22 ist von Vorteil, da die prognostizierte Absatzmenge auch von mehreren, unterschiedlichen Waren vorgegeben und der Bedienperson anhand deren ein Sollbedarf bekannt gegebenen wird, sodass ein entsprechender Nachfüllvorgang erfolgen kann. Dazu erhält die Bedienperson wiederum über die Bedieneinheit Informationen, beispielsweise welche Anzahl an Waren in den Vorratsmagazinen bereitgestellt werden muss.

Eine vorteilhafte Maßnahme ist auch im Anspruch 23 beschrieben, wodurch zu einem Auftrag in all jenen Vorratsmagazinen die Füllstände gemessen werden, in denen die zu diesem Auftrag angeforderten Waren enthalten sind und die Bedienperson nur jene Vorratsmagazine auffüllen muss, bei welchen der aus dem Auftrag errechnete Bedarf größer ist als die vorhandene Anzahl an Waren.

Eine weitere Maßnahme der Erfindung ist im Anspruch 24 beschrieben. Von Vorteil ist, dass aus allen erfassten Aufträgen der Summenbedarf der Waren ermittelt wird und wenn der Istbestand an Waren zur ordnungsgemäßen Erledigung aller Aufträge nicht ausreichend ist, die Bedienperson aufgefordert wird, eine Nachfüllung des jeweiligen Vorratsmagazins vorzunehmen. Das heißt, sobald die Gefahr besteht, dass ein Vorratsmagazin nahezu vollständig entleert wird, da der Istbestand geringer ist als der Summenbedarf der Waren aller eingegangenen Aufträge, wird eine Bedarfsmeldung ausgegeben. Dazu kann die Bedienperson wiederum die Information erhalten über die Anzahl der nachzufüllenden Waren oder eine Zeitspanne innerhalb welcher der Nachfüllvorgang zu erfolgen hat, um alle Aufträge zu erfüllen. Letztere Information kann beispielsweise durch ein Warnlampe mit unterschiedlichen Blinkfrequenzen oder an einer Anzeigentafel ausgegebenen werden. Dadurch erhält die Bedienperson gewissermaßen eine Prioritätenliste, welche angibt, welches Vorratsmagazin vorrangig zu befüllen ist und welches "später" nachgefüllt werden kann. Ein durch vollständiges Entleeren eines Vorratsmagazins bedingter Stillstand der Vorrichtung kann somit ausgeschlossen werden.

Vorteilhafte Ausgabemöglichkeiten der Bedarfsmeldung sind im Anspruch 25 beschrieben.

Gemäß den Maßnahmen der Ansprüche 26 und 27 wird je nach Anforderungsprofil eines Auftrags oder einer prognostizierten Absatzmenge der Stellwagen koordiniert verfahren.

Vorteilhafte Maßnahmen sind auch in den Ansprüchen 28 und 29 beschrieben, wodurch nun von allen Vorratsmagazinen der Füllstand ermittelt werden kann und der Bedienperson sofort bekannt ist, gegebenenfalls unabhängig von den Aufträgen, welche Vorratsmagazine vermutlich dringend aufzufüllen sind. Der Nachfüllvorgang jener Vorratsmagazine, in welchen nur mehr eine geringe Anzahl von Waren enthalten ist, kann noch vor dem Betrieb der Vorrichtung erfolgen. Sofern bereits Aufträge im Rechnersystem erfasst wurden, kann auch bereits gegengeprüft werden, ob der Tagesbedarf mit den bereitgestellten Waren in den Vorratsmagazinen ausreichend ist. Ist der Tagesbedarf abgedeckt, steht die Bedienperson für andere Arbeiten zur Verfügung. Damit kann eine Ressourcenplanung an Bedienpersonal vorgenommen werden.

Die Erfindung wird im Nachfolgenden anhand der in den Zeichnungen dargestellten Ausführungsbeispiele näher erläutert.

Es zeigen:
- Fig. 1: eine erfindungsgemäße Vorrichtung zur Bereitstellung von stapelbaren Waren, mit zu beiden Seiten einer Fördereinrichtung angeordneten Speichereinrichtungen und einer Erfassungseinrichtung, in perspektivischer Ansicht und stark vereinfachter Darstellung;
- Fig. 2: die Vorrichtung nach Fig. 1 in Seitenansicht und stark vereinfachter Darstellung;
- Fig. 3: eine Schnitterstellung der Vorrichtung nach Fig. 1 mit den gegenüberliegend angeordneten Vorratsmagazinen, den Abgabevorrichtungen, der Fördereinrichtung sowie der Erfassungseinrichtung, in stark vereinfachter Darstellung;
- Fig. 4: eine vergrößerte Darstellung eines entlang einer Führungsbahn verfahrbaren Stellwagens der Erfassungseinrichtung mit einer ersten Ausführungsform seiner Antriebsvorrichtung, in perspektivischer Ansicht, stark vereinfachter Darstellung und mit vom Stellwagen entfernter, vorderen Stirnwand;
- Fig. 5: eine weitere Ausführung der Erfassungseinrichtung mit zwei voneinander getrennt ansteuerbaren Stellwagen und einer anderen Ausführungsvariante der Antriebsvorrichtungen für die Stellwagen sowie den Speichereinrichtungen, in Draufsicht und stark vereinfachter schematischer Darstellung.

Einführend sei festgehalten, dass in den unterschiedlich beschriebenen Ausführungsformen gleiche Teile mit gleichen Bezugszeichen bzw. gleichen Bauteilbezeichnungen versehen werden, wobei die in der gesamten Beschreibung enthaltenen Offenbarungen sinngemäß auf gleiche Teile mit gleichen Bezugszeichen bzw. gleichen Bauteilbezeichnungen übertragen werden können. Auch sind die in der Beschreibung gewählten Lageangaben, wie z.B. oben, unten, seitlich usw. auf die unmittelbar beschriebene sowie dargestellte Figur bezogen und sind bei einer Lageänderung sinngemäß auf die neue Lage zu übertragen. Weiters können auch Einzelmerkmale oder Merkmalskombinationen aus den gezeigten und beschriebenen unterschiedlichen Ausführungsbeispielen für sich eigenständige, erfinderische oder erfindungsgemäße Lösungen darstellen.

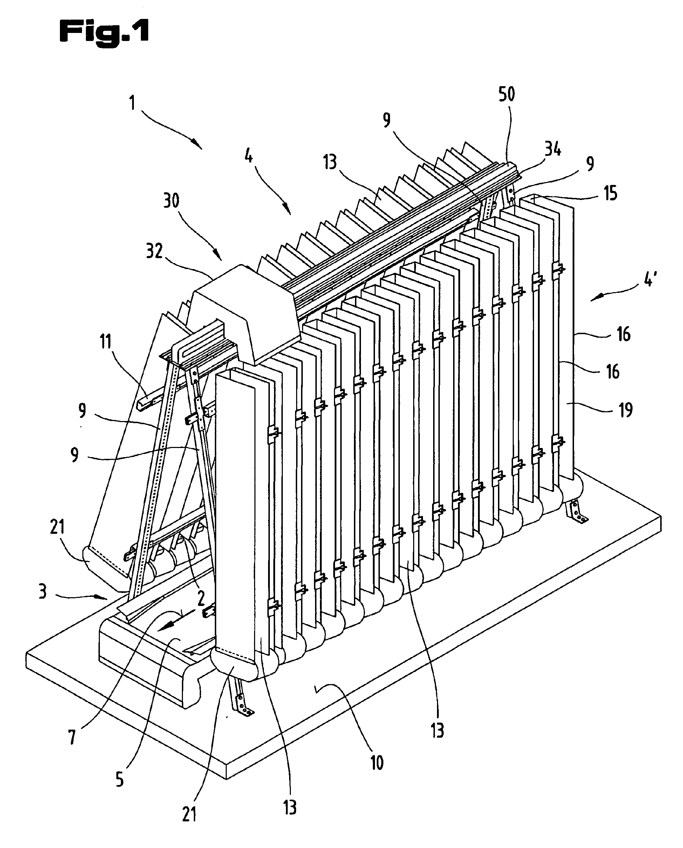

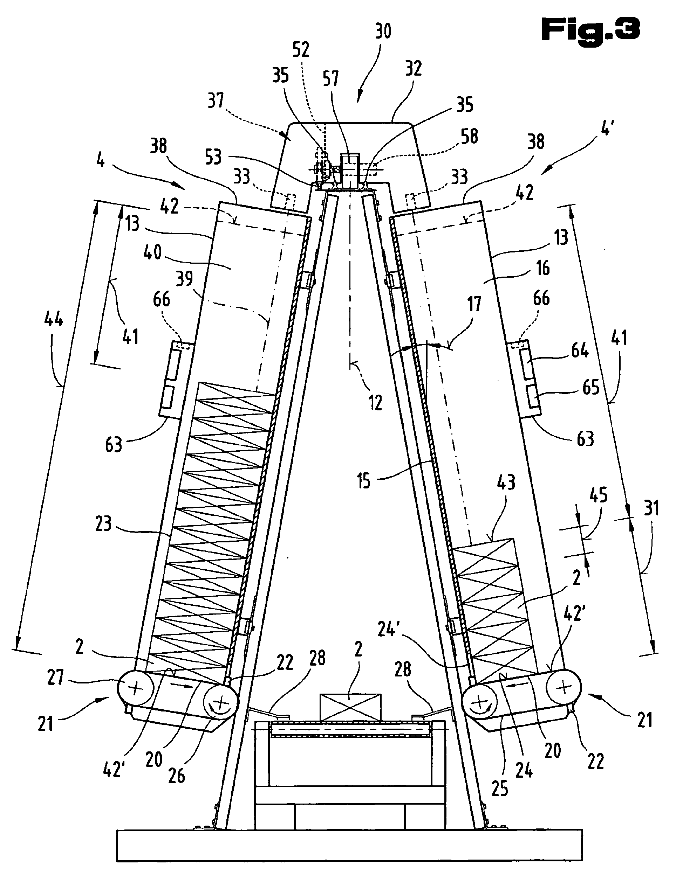

In den gemeinsam beschriebenen Fig. 1 bis 4 ist eine erfindungsgemäße, rechnergesteuerte Vorrichtung 1 zur Bereitstellung von stapelbaren Waren 2 in schachtartigen Vorratsmagazinen von Speichereinrichtungen und Überwachung der Füllstände in den Vorratsmagazinen mittels einer Erfassungseinrichtung, in unterschiedlichen Ansichten gezeigt. Die Waren 2 sind aus Gründen der besseren Übersicht nur in Fig. 3 eingetragen. Die Vorrichtung 1 weist zu beiden Seiten einer Fördereinrichtung 3, insbesondere eines Horizontalförderers, wie beispielsweise Bandförderer, angeordnete Speichereinrichtungen 4, 4' auf und bildet eine Kommissionieranlage aus. Ein Förderorgan 5, insbesondere ein Förderband, ist an einen Antrieb 6 gekuppelt und vorzugsweise ununterbrochen mit gleichmäßiger Geschwindigkeit in Förderrichtung - gemäß Pfeil 7 - angetrieben. Am Abgabeende der ersten Fördereinrichtung 3 ist beispielsweise eine querverlaufende, zweite Fördereinrichtung (nicht dargestellt) angeordnet, über welche die zu Aufträgen zusammengefassten, kommissionierten Waren 2 in Transportbehältern abtransportiert werden.

Die Vorrichtung 1 ist über einen Tragrahmen 8, insbesondere Steher 9 auf einer horizontalen Aufstandsfläche 10 abgestützt. Der Tragrahmen 8 der Vorrichtung 1 ist durch quer zur Förderrichtung - gemäß Pfeil 7 - paarweise gegenüberliegende und von unten nach oben geneigt aufeinander zulaufende Steher 9 und diese verbindende Längsträger 11 gebildet.

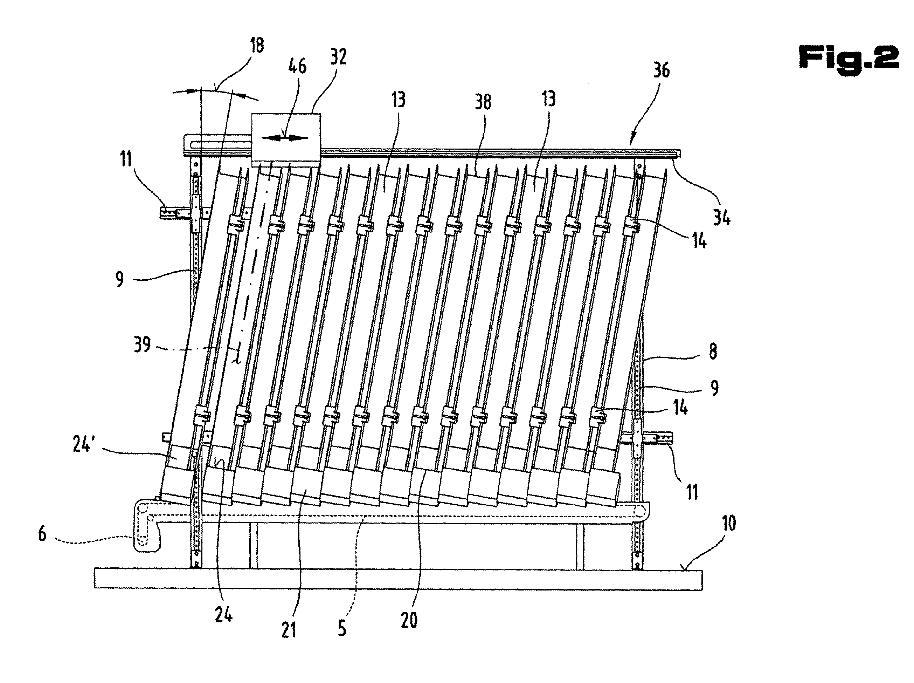

Die in Bezug auf eine vertikale Symmetrieebene 12 der Vorrichtung 1 einander gegenüberliegenden Speichereinrichtungen 4, 4' weisen jeweils in deren Längserstreckung und längs der Fördereinrichtung 3 in einer Reihe fluchtend hintereinander angeordnete, schachtartige, längliche Vorratsmagazine 13 auf, die jeweils durch ein etwa U-förmiges Führungsprofil gebildet sind. Diese Vorratsmagazine 13 sind über Befestigungsklemmen 14 miteinander verbunden. Die Speichereinrichtungen 4, 4' erstrecken sich jeweils über eine Teillänge der Fördeeinrichtung 3 und weisen bevorzugt die gleiche Länge auf. Die einzelnen Vorratsmagazine 13 der Speichereinrichtungen 4, 4' sind sowohl zum Förderband des Bandförderers hin als auch in Längsrichtung des Bandförderers derart geneigt, dass die zu kommissionierenden Waren 2 an einer Basis 15 und an einem der von der Basis 15 senkrecht vorragenden, parallelen Schenkeln 16 der Führungsprofile zumindest bereichsweise anliegen. Die Neigung der Führungsprofile zur Mitte des Förderbandes, ist durch den von der senkrechten Richtung abweichenden Neigungswinkel 17 (siehe Fig. 3) und die Neigung in Förderrichtung - gemäß Pfeil 7 - des Förderbandes, durch den von der senkrechten Richtung abweichenden Neigungswinkel 18 (siehe Fig. 2) aufgezeigt. Natürlich können die Vorratsmagazine 13 bzw. die Führungsprofile auch nur in Richtung zum Förderband des Bandförderers hin geneigt sein, stellt jedoch die doppelte Neigung, entsprechend den Neigungswinkeln 17, 18 die bevorzugte Ausfiihrung dar.

Wie sich aus den Fig. erkennen lässt, erstreckt sich zwischen den parallelen Schenkeln 16 über die gesamte Länge der Vorratsmagazine 13 eine schlitzartige Warennachfüllöffnung 19, über die die Vorratsmagazine 13 von Hand mit Waren 2 beschickt werden können. Die zu kommissionierenden Waren 2 mit vorzugsweiser kubischer Raumform, werden dabei aufeinander gestapelt. Die Vorratsmagazine 13 reichen nur so hoch, sodass eine nicht weiters dargestellte Bedienperson auch die im Vorratsmagazin 13 höchstgelegene Nachfüllposition einfach erreichen kann. Die zu kommissionierenden Waren 2 werden in die schachtartigen Vorratsmagazine 13 von Hand eingefüllt und bilden unter ihrem Gewicht Stapel.

Wie in Fig. 3 näher dargestellt, ist im Bereich von unteren Enden 20 eines jeden Vorratsmagazins 13 eine vom Rechnersystem gesteuerte Abgabevorrichtung 21 vorgesehen. Jede Abgabevorrichtung 21 ist am Tragrahmen 8 befestigt und weist zumindest einen quer zur Längserstreckung der Fördereinrichtung 3 verschiebbaren Mitnehmer 22 auf, mit dem die jeweils unterste Ware 2 aus dem Warenstapel 23 des jeweiligen Vorratsmagazins 13 auf das mit geringem Abstand unterhalb einer von der Abgabevorrichtung 21 ausgebildeten Abgabeebene 24 angeordnete Förderorgan, insbesondere das obere Trum vom Förderband, oder, wie nicht weiters dargestellt, an einen an den Vorratsmagazinen 13 vorbeigeführten, zu kommissionierenden Warenträger, insbesondere Transportbehälter, abgegeben wird. Die auftragsgebundenen Warenträger werden mittels der Fördereinrichtung 3 transportiert.

Beispielsweise ist jede Abgabevorrichtung 21 durch einen Zugmitteltrieb gebildet, der wenigstens ein über ein Antriebsrad 26 und Umlenkrad 27 umlaufendes, endloses flexibles Zugmittel 25, wie beispielsweise Riemen, Kette und dgl., umfasst, das mit dem wenigstens einen Mitnehmer 22 versehen und von einem Antriebsmotor, insbesondere Elektromotor, in nur eine Richtung antreibbar ist. Das obere Trum des Zugmittels 25 bildet die Abgabeebene 24 aus. Das Antriebsrad 26 ist mit dem Antriebsmotor gekuppelt. Der Antriebsmotor der Abgabevorrichtungen 21 ist mit einer Steuereinheit vom Rechnersystem verbunden. Gemäß gezeigter Ausführung, ist das antreibbare Zugmittel 25 mit zwei versetzten Mitnehmern 22 versehen, sodass dann, wenn der eine Mitnehmer 22 eine Ware 2 gerade aus dem Vorratsmagazin 13 ausgeschoben hat, der nächste Mitnehmer 22 entweder in Bereitschaft steht oder aber das Herausrutschen der nächsten Ware 2 verhindert. Wird der Antriebsmotor in Gang gesetzt, so bewegt er die Mitnehmer 22 im Gegenuhrzeigersinn, sodass der rechts unten befindliche Mitnehmer 22 erst etwa nach einer halben Umdrehung an der Ware 2 angreift und diese ausschiebt. Die Ware 2 wird beim Ausschieben vorerst entlang der Abgabeebene 24 durch eine Abgabeöffnung 24' und nach deren Verlassen an einem Führungsblech 28 geführt, bis eine vordere Kante von der Ware 2 auf dem Förderorgan 5 bzw. Förderband aufliegt. Die Führungsbleche 28 sind zu beiden Seiten der Fördereinrichtung 3 und parallel zu deren Längserstreckung angeordnet sowie an den Stehern 9 befestigt. Die Abgaberichtung - gemäß eingetragenem Pfeil - verläuft quer zur Längserstreckung der Fördereinrichtung 3.

Eine andere, nicht gezeigte Ausführung besteht darin, dass der verschiebbare Mitnehmer 22 beispielsweise an einem Druckmittelzylinder, wie Pneumatik- oder Hydraulikzylinder und dgl., angeordnet ist.

Die Vorrichtung 1 umfasst zusätzlich eine Erfassungseinrichtung 30 zur Bestimmung der Füllstände 31 von Waren 2 in den Vorratsmagazinen 13 der Speichereinrichtungen 4, 4', wie in den Fig. schematisch eingetragen. Diese Erfassungseinrichtung 30 weist erfindungsgemäß einen rechnergesteuerten Stellwagen 32 und nach dieser Ausführung vorzugsweise zwei Messeinrichtungen 33 auf, die mit einer Steuereinheit vom Rechnersystem verbunden, am Stellwagen 32 angeordnet und je einer Speichereinrichtung 4, 4' zugeordnet sind. Zwischen dem Stellwagen 32 und einem Tragprofil 34 des Tragrahmens 8 ist eine Führungsvorrichtung, wie Gleit- oder Wälzführung, angeordnet, die durch eine am Stellwagen 32 angeordnete Führungsanordnung 35 und eine am Tragprofil 34 befestigte Führungsbahn 36 gebildet ist. Der Stellwagen 32 ist mit seiner Führungsanordnung 35 auf einer Führungsbahn 36 am Tragrahmen 8 der Vorrichtung 1 geführt bzw. gelagert und über eine noch näher zu beschreibende Antriebsvorrichtung 37 entlang der Führungsbahn 36 zwischen den einzelnen Vorratsmagazinen 13 im Wesentlichen horizontal verstellbar. Die Speichereinrichtungen 4, 4' sind zu beiden Seiten der Führungsbahn 36 vorgesehen.

Nach dieser Ausführung ist die Führungsbahn 36 durch zwei Linearführungen 36' gebildet, die am Tragprofil 34 bevorzugt lösbar befestigt sind. Das Tragprofil 34 ist mit den geneigt aufeinander zulaufenden Stehern 9 im Bereich deren von der Aufstandsfläche 10 abgewandten, oberen Enden verbunden und erstreckt sich zwischen den mit Abstand voneinander aufgestellten Paaren von Stehern 9. Die Führungsbahn 36 bzw. die diese bildenden Linearführungen 36' verlaufen mit Abstand parallel zueinander und parallel zur Längserstreckung der Fördereinrichtung 3. Die Linearführungen 36' sind beispielsweise durch Profilschienen, Schwalbenschwanzführungen, Flachführungen, Prismenführungen und dgl. gebildet, während die am Verstellwagen 32 vorgesehenen Führungsanordnungen 35 komplementär zu den Linearführungen 36' ausgebildete Gleitführungen oder Wälzführungen sind.

Die Messeinrichtungen 33 am Stellwagen 32 sind zu beiden Seiten der in Richtung der Fördereinrichtung 3 verlaufenden Führungsbahn 36 und mit geringem Abstand unmittelbar oberhalb von oberen Enden 38 der in Reihe hintereinander gereihten Vorratsmagazinen 13 der Speichereinrichtungen 4, 4' angeordnet. Demgemäß ist jede Messeinrichtung 33 quer zur Führungsbahn 36 bzw. quer zur Längserstreckung der Speichereinrichtungen 4, 4' in Richtung der jeweiligen Speichereinrichtung 4, 4' versetzt angeordnet und derart ausgerichtet, dass ein von der Messeinrichtung 33 ausgesandter Abtaststrahl 39 oder eine ausgestrahlte Abtastwelle im Wesentlichen senkrecht auf die Abgabeebene 24 der Abgabevorrichtung 21 verläuft. Verfährt der Stellwagen 32 in eine Messposition unmittelbar oberhalb eines vom U-förmigen Führungsprofil begrenzten Füllraumes 40, so trifft dann der innerhalb des Füllraumes 40 verlaufende Abtaststrahl 39 oder die Abtastwelle der Messeinrichtung 33 auf die oberste Ware 2 vom Warenstapel 23 auf.

Somit wird also über die Messeinrichtung 33 abhängig von den im Rechnersystem eingegebenen Aufträgen nur von einigen der Vorratsmagazine 13 der Speichereinrichtungen 4, 4', gegebenenfalls an einem jeden Vorratsmagazin 13 der Speichereinrichtungen 4,4' eine Distanz 41 zwischen einer oberen Füllstandsbegrenzung 42 und einer ebenen Oberfläche 43 der jeweils von der Abgabevorrichtung 21 entferntest liegenden Ware 2 sensorisch erfasst. Nachdem die Distanz 41 erfasst wurde, kann mit dem Rechnersystem des Lagerverwaltungssystems der Füllstand 31 für die betreffenden Vorratsmagazine 13 bzw. der Istbestand an Waren 2 in den betreffenden Vorratsmagazinen 13 errechnet werden. Der Füllstand 31 errechnet sich aus der Differenz zwischen einer durch die Länge des Vorratsmagazins 13 vorgegebenen maximalen Füllhöhe 44 und der Distanz 41. Dabei ist die maximalen Füllhöhe 44 durch die obere Füllstandsbegrenzung 42, vorgegeben durch das stirnseitige, obere Ende 38 jedes Vorratsmagazins 13, und eine untere Füllstandsbegrenzung 42', vorgegeben durch das stirnseitige, untere Ende 20 jedes Vorratsmagazins 13, begrenzt. Vorzugsweise wird in einem jeden Vorratsmagazin 13 nur eine Sorte von Ware 2 untergebracht, deren jeweilige individuelle Abmessung 45 zumindest in Stapelrichtung im Rechnersystem elektronisch erfasst wird, wodurch nach der Ermittlung des Füllstandes 31 die Anzahl der Waren 2 in jedem Vorratsmagazin 13 bzw. der Istbestand an Waren 2 in jedem Vorratsmagazin 13 errechnet wird (werden).

Da nun die Messeinrichtungen 33 gemeinsam mit dem Stellwagen 32 gegenüber den Vorratsmagazinen 13 der Speichereinrichtungen 4, 4' verstellbar am Tragrahmen 8 gelagert sind, kann (können) auf einfache Weise während der Verstellbewegung des Stellwagens 32 in Längsrichtung der Speichereinrichtung 4, 4' in nur einem Vorratsmagazin 13 oder mehreren der in Verstellrichtung - gemäß Pfeil 46 - des Stellwagens 31 aufeinander folgenden Vorratsmagazine 13 der Füllstand 31 oder die Füllstände 31 sequentiell ermittelt werden, wie im Nachfolgenden noch näher beschrieben wird.

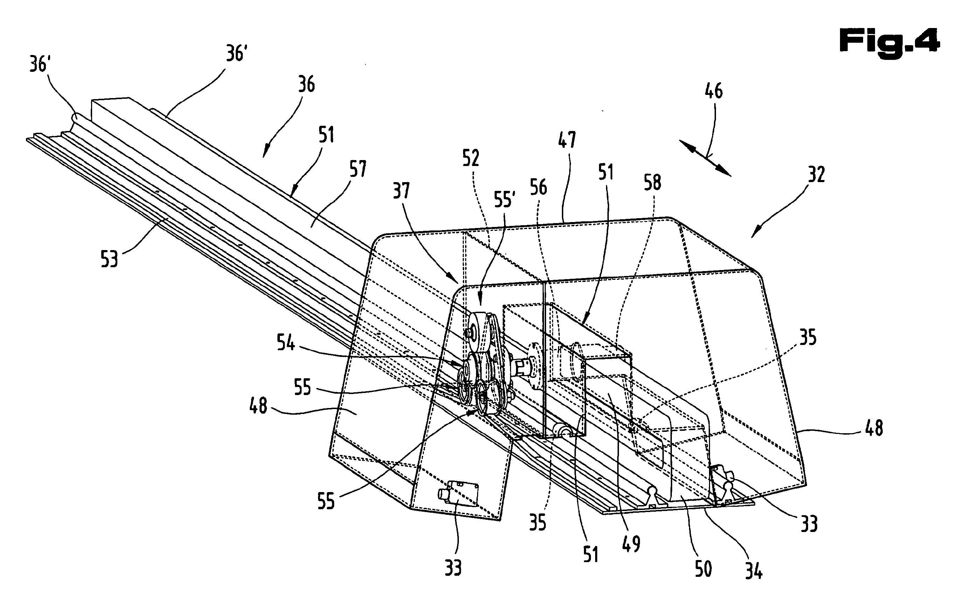

In Fig. 4 ist der positioniert verstellbare Stellwagen 32 in vergrößerter Darstellung gezeigt, der, wie bereits oben kurz beschrieben, über die Antriebsvorrichtung 37 entlang der Führungsbahn 36 im Wesentlichen horizontal verstellbar ist und ein Rahmengehäuse 47 umfasst. Aus Gründen der besseren Einsicht auf die Antriebsvorrichtung 37, ist eine vordere Stirnwand des Rahmengehäuses 47 entfernt. Das Rahmengehäuse 47 ist beispielsweise durch eine Blechbiegekonstruktion gebildet und auf der den Linearführungen 36' zugewandten Unterseite mit den oben beschriebenen Führungsanordnungen 35 versehen und weist zu den beiden Seiten der Führungsanordnungen 35 an der Unterseite des Rahmengehäuses 47 jeweils in Richtung der Speichereinrichtungen 4, 4' vorkragende Gehäuseteile 48 auf, an denen jeweils die Messeinrichtungen 33 befestigt sind. Wie weiters dargestellt, weist das Rahmengehäuse 47 zusätzlich zwischen den Gehäuseteilen 48 einen von der Unterseite in Richtung der Oberseite erstreckenden Aufnahmekanal 49 für ein Energie- und Signalübertragungssystem 50 sowie eine zwischen der Unter- und Oberseite parallel zu Innenwänden 51 verlaufende Stützwand 52 auf. Der Aufnahmekanal 49 ist seitlich durch die Innenwände 51 begrenzt. An den Stirnseiten des Rahmengehäuses 47 sind Stirnwände befestigt.

Die Antriebsvorrichtung 37 für den Stellwagen 32 ist nach dieser Ausführung durch einen Zugmitteltrieb gebildet, der ein endliches Zugmittel 53, insbesondere einen Zahnriemen, Kette und dgl., umfasst, dessen beiden freien Enden am Tragrahmen 8, insbesondere am Tragprofil 34 befestigt sind. Das Zugmittel 53 ist über ein Antriebsrad 54, insbesondere eine Zahnscheibe, geführt und an beidseitig zu diesen angeordneten Rädern 55 umgelenkt. Wie eingetragen, kann bei höheren Verstellgeschwindigkeiten vom Stellwagen 32 - etwa im Bereich von 0,2 m/s bis 0,3 m/s - ein Andrückrad 55' für das Zugmittel 53 vorgesehen werden. Das Antriebsrad 54, die Räder 55 und das Andrückrad 55' sind zueinander achsparallel angeordnet und am Rahmengehäuse 47, insbesondere an der Stützwand 52 drehbar gelagert, wobei das Antriebsrad 54 gegebenenfalls unter Zwischenschaltung einer eingetragenen Kupplung mit einem Antriebsmotor 56, wie Elektro-, Pneumatik-, Hydraulik- oder Hybridmotor und dgl., gekuppelt ist. Der Antriebsmotor 56 ist ebenfalls am Rahmengehäuse 47, insbesondere an einer Innenwand 51 befestigt. Eine derartige Antriebsvorrichtung 37 ist allgemein als so genannter Omega-Antrieb bekannt. Weitere Ausführungsvarianten der Antriebsvorrichtung 37 für den Stellwagen 32 sind später beschrieben.

Wie in dieser Figur ebenfalls ersichtlich, weist die Vorrichtung 1 das Energie- und Signalübertragungssystem 50 auf, über welches der Stellwagen 32 mit dem Rechnersystem verbunden ist und der Antriebsmotor 56 mit elektrischer oder mechanischer Energie versorgt wird sowie Signale/Daten zwischen dem Rechnersystem und dem Antriebsmotor 56 übertragen werden. Gemäß dieser Ausführung ist das Energie- und Signalübertragungssystem 50 durch eine Vielzahl von elektrischen Leitungen oder Druckmittel führenden Leitungen und/oder eine Busleitung eines Bussystems, wie beispielsweise Profi-Bussystem und dgl. gebildet. Diese Leitungen und/oder die Busleitung werden während der Verstellbewegung des Stellwagens 32 mitbewegt und ist deshalb zu deren Führung eine an sich bekannte Energiekette 57 vorgesehen. Der Antriebsmotor 56 ist über eine elektrische Signalleitung oder das Bussystem mit der Steuereinheit vom Rechnersystem des Lagerverwaltungssystems verbunden. Das Rechnersystem steuert den Antriebsmotor 56 an. Dazu umfasst das Rechnersystem die Steuereinheit und einen mit dieser verbundenen Rechner (Personal Computer).

Wie nicht weiters dargestellt, kann für das Energie- und Signalübertragungssystem 50 alternativ auch eine an sich bekannte Schleifleitungsanordnung eingesetzt werden, die am Tragrahmen 8, insbesondere am Tragprofil 34 bewegungsfest angeordnete Schleifleitungen und am Stellwagen 32 befestige Schleifkontakte umfasst. Dabei sind die elektrische Energie und elektrischen Steuersignale für den Antriebsmotor 56 mittels den Schleifleitungen zuführbar und mittels den Schleifkontakten aus den Schleifleitungen abnehmbar.

Eine andere, nicht dargestellte Ausführung des Energie- und Signalübertragungssystems 50 besteht darin, dass dieses durch die im Zugmittel 53 ohnehin vorhanden Zugstränge aus Aramid- oder Glasfasern oder Stahlcord, gebildet ist, also Materialien, die elektrisch leitfähig sind, und die Energieversorgung und Übertragung der Steuer- und Datenübertragungssignale über die Zugstränge des Zugmittels 53 zwischen dem Antriebsmotor 56 und der am Rechnersystem angeschlossenen Steuereinheit erfolgt. Dazu sind die Zugstränge über elektrische Leitungen mit dem Antriebsmotor 56 und der Steuereinheit verbunden.

Schließlich ist es aber auch möglich, dass das nicht weiters dargestellte Energie- und Signalübertragungssystem 50 durch eine Sende- und Empfangseinheit am Stellwagen 32 sowie eine Sende- und Empfangseinheit an der Steuereinheit vom Rechnersystem gebildet ist, sodass die elektrische Energie und/oder elektrischen Steuersignale und/oder Datenübertragungssignale drahtlos zwischen dem Stellwagen 32 und dem ebenfalls die Sende- und Empfangseinheit aufweisenden Rechnersystem übertragen werden. Der Antriebsmotor 56 erhält seine Steuersignale über eine ebenfalls am Stellwagen 32 angeordnete Sende- und Empfangseinheit, die über beispielsweise eine optische Datenübertragung, insbesondere Infrarot- Datenübertragung oder Laser-Datenübertragung, mit der Steuereinheit verbunden ist. Ebenso ist eine berührungslose Signal- und/oder Datenübertragung zwischen der Steuereinheit und dem Antriebsmotor 56 und/oder berührungslose Energieversorgung des elektrischen Antriebsmotors 56 auf elektromagnetischem und/oder induktivem Wege, wie Funk, z.B. Bluetooth^{™}, WLAN (Wireless Local Area Network), Wirbelfelder möglich.

Außerdem können auch die beiden Messeinrichtungen 33 mittels dem oben beschriebenen Energie- und Signalübertragungssystem 50 mit der Steuereinheit verbunden werden und mit elektrischer Energie auf kontaktierendem Wege, wie den Leitungen und/oder die Busleitung, Schleifleitungsanordnung oder den Zugsträngen des Zugmittels 53, die an der Steuereinheit vom Rechnersystem und den Messeinrichtungen 33 angeschlossen sind, oder berührungslosem Wege, wie elektromagnetisch, optisch oder induktiv, versorgt werden.

In einer anderen Ausführung sind die Messeinrichtungen 33 jeweils mit einer, nicht weiters dargestellten Sende- und Empfangseinheit ausgestattet, wobei über die Empfangseinheit auf drahtlosem Wege eine Energieversorgung der jeweiligen Messeinrichtung 33 erfolgt und mittels der Sendeeinheit die elektrischen Messsignale aus der Messung der Distanz 41 zur Bestimmung des Füllstandes 31 im entsprechenden Vorratsmagazin 13, entweder an die am Rechnersystem angeschlossene Steuereinheit oder an eine am Rechnersystem angeschlossene, noch näher zu beschreibende Bedieneinheit übermittelt werden.

Die Messeinrichtungen 33 bilden Distanzmesseinrichtungen aus und sind beispielsweise durch ein opto-elektronisches Messsystem, insbesondere Laser- oder Infrarotmesssystem oder Triangulationssensor und dgl., oder durch einen Ultraschallsensor gebildet, mit denen die Distanz 41 im Ausmaß von etwa 2,5 m problemlos gemessen und der Füllstand 31 in den jeweiligen Vorratsmagazinen 13 zuverlässig ermittelt werden kann. Sind Vorratsmagazin 13 mit niedriger Füllhöhe 44 vorgesehen, so wäre es auch denkbar, dass die Messeinrichtungen 33 durch einen kapazitiven Sensor gebildet sind und ein Abtastfeld der Messeinrichtungen 33 im Wesentlichen parallel zur Längserstreckung der Vorratsmagazine 13 und im Wesentlichen senkrecht auf die Abgabeebene 24 der Abgabevorrichtungen 21 ausgerichtet ist.

Wie in Zusammenhang mit Fig. 1 ersichtlich, ist eine exakte Zuordnung der anzufahrenden Messpositionen des Stellwagens 32 zu einem jeden Vorratsmagazine 13 gefordert, um für jedes der Vorratsmagazine 13 die zugehörigen Füllstände 31 ermitteln zu können. Es wird davon ausgegangen, dass für diesen Fall der Stellwagen 32 ununterbrochen pendelnd zwischen dem in Verstellrichtung - gemäß Pfeil 46 - ersten Vorratsmagazin 13 und letzten Vorratsmagazin 13 der Speichereinrichtung 4, 4' verfahren wird und die Füllstände 31 in einem jeden Vorratsmagazin 13 sequentiell ermittelt werden. Über den Verstellweg des Stellwagens 32 betrachtet, sind genau so viele Messpositionen anzufahren, wie eine Speichereinrichtung 4, 4' Vorratsmagazine 13 aufweist, wobei eine Messposition derart zu verstehen ist, dass die Messeinrichtung 33 dabei etwa mittig zwischen den Schenkeln 16 und oberhalb des Füllraumes 40 eines Vorratsmagazins 13 positioniert ist.

Damit eine solche Zuordnung einer vom Stellwagen 32 angefahrenen Messposition zu einem Vorratsmagazin 13 möglich ist, ist ein Positioniersystem 58 für die Positionierung des Stellwagens 32 gegenüber den einzelnen Vorratsmagazinen 13 der Speichereinrichtung 4, 4' vorgesehen. Dabei wird fortlaufend die Istposition des Stellwagens 32 an die Steuereinheit vom Rechnersystem übermittelt. Die Steuereinheit vergleicht die Istposition mit den vom Rechnersystem vorgegebenen und den Vorratsmagazinen 13 zugeordneten Messpositionen und bei Übereinstimmung der Istposition mit jeweils einer der Messpositionen, wird die Distanz 41 gemessen und als elektrisches Messsignal an die Steuereinheit übermittelt, worauf in oben beschriebener Weise der Füllstand 31 bzw. der Istbestand an Waren 4 im jeweiligen Vorratsmagazin 13 ermittelt wird.

Andererseits ist es auch möglich, dass für einen im Rechnersystem eingegebenen Auftrag nur in einzelnen Vorratsmagazinen 13 die Füllstände 31 ermittelt werden müssen. Für diesen Fall werden vom Stellwagen 32 nur jene Messpositionen angefahren, in denen die für diesen Auf trag zu kommissionierenden Waren 2 aufbewahrt sind. Jede Messposition befindet sich unmittelbar oberhalb jedes Vorratsmagazins 13. An diesen Messpositionen wird sodann die Distanz 41 zur Bestimmung der Füllstände 31 gemessen. Zum positionierten Anfahren dieser Messpositionen wird der Antriebsmotor 56 vom Rechnersystem entsprechend angesteuert und dabei fortlaufend die Istposition vom Stellwagen 32 an das Rechnersystem übermittelt.

Nach beiden Varianten erfolgt die Messung der Distanz 41, sobald eine Messposition erreicht ist. Während der Messung kann der Stellwagen 32 in der Messposition kurzzeitig verweilen oder mit verringerter Verstellgeschwindigkeit verfahren oder mit normaler Verstellgeschwindigkeit verfahren.

Das Positioniersystem 58 zur Steuerung der Position vom Stellwagen 32, ist vorzugsweise durch eine mit der Steuereinheit verbundene Wegmessvorrichtung gebildet, über welche die Istposition vom Stellwagen 32 bzw. eine Relativlage des Stellwagens 32 gegenüber den einzelnen Vorratsmagazinen 13 sensorisch erfasst wird. Die Wegmessvorrichtung ist durch einen an sich bekannten, kapazitiven Wegaufnehmer, induktiven Wegaufnehmer, magnetischen Wegaufnehmer oder optoelektronischen Wegaufnehmer gebildet. Dabei macht man sich das Messverfahren der absoluten und inkrementalen Wegmessung zu Nutze.

Nach der gezeigten Ausführung, ist der Antriebsmotor 56 mit einem Resolver bzw. Inkrementalgeber als Positioniersystem 58 versehen, mittels dem die Istposition vom Stellwagen 32 permanent erfasst wird. Anhand dem permanenten Vergleich der Istposition mit den Sollpositionen, die den anzufahrenden Messpositionen entsprechen, kann nun der Stellwagen 32 geregelt angesteuert werden.

Das Positioniersystem 58 kann andererseits auch durch ein nicht dargestelltes Barcode-Positioniersystem gebildet sein, bei dem über die gesamte Länge des Verstellweges vom Stellwagen 32 ein Barcodeetikett am Tragrahmen 8 der Vorrichtung 1 befestigt und über ein am Stellwagen 32 angeordnetes Barcodelesegerät nach dem optischen Messverfahren, insbesondere mittels einem sichtbaren Rotlichtlaser, die Istposition vom Stellwagen 32 relativ zum Barcodeband bzw. dem Tragrahmen 8 ermittelt wird. Die ermittelte Istposition bzw. der Istpositionswert wird an die Steuereinheit übergeben.

Bei niedrigen mechanischen Beanspruchungen wäre es auch denkbar, dass entlang dem Verstellweg vom Stellwagen 32, einem jeden Vorratsmagazin 13 zugeordnet, Näherungssensoren oder mechanisch wirkende Endschalter vorgesehen sind, über welche die Messpositionen oberhalb eines jeden Vorratsmagazins 13 exakt angefahren werden können. Der Verstellweg vom Stellwagen 32 erstreckt sich über die gesamte Längserstreckung der Speichereinrichtungen 4, 4'.

Weiterhin besteht auch die Möglichkeit, dass das Positioniersystem 58 ein nicht gezeigtes Positionsortungssystem, insbesondere eine Navigationsvorrichtung in Form von GPS zur Erfassung der Istposition des Stellwagens 32 gegenüber einem jeden einzelnen Vorratsmagazin 13 umfasst. Dazu sind der Stellwagen 32 mit einer Sende- und/oder Empfangseinrichtung und zum anderen die Steuereinheit mit einer Sende- und/oder Empfangseinrichtung versehen, über die ein drahtloser Datenaustausch erfolgt.

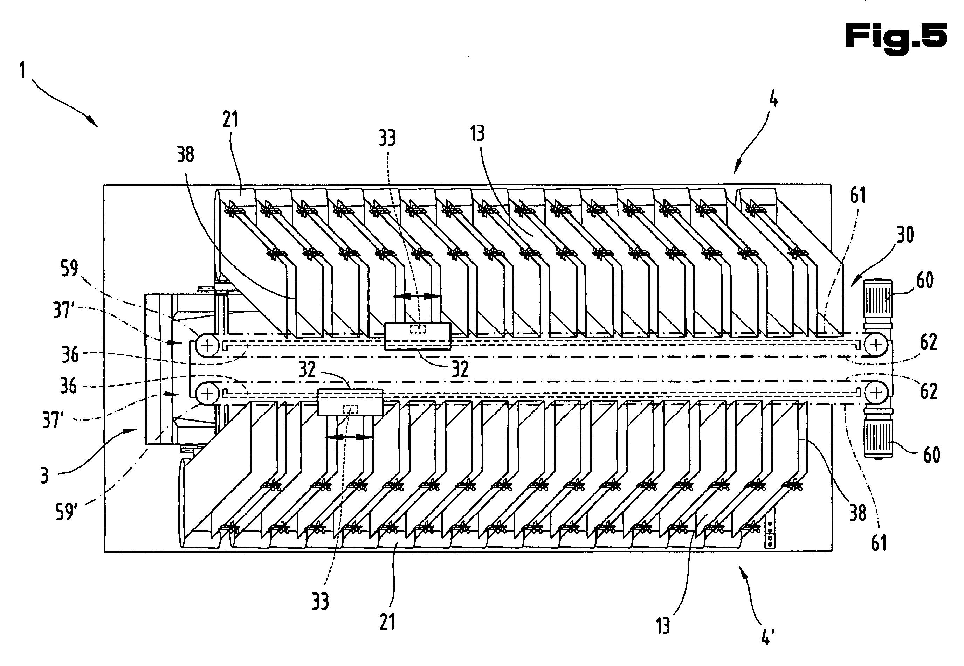

In der Fig. 5 ist eine weitere mögliche Ausführungsvariante der Erfassungseinrichtung 30 mit zwei Stellwagen 32 und den diesen zugeordneten Antriebsvorrichtungen 37' in stark vereinfachter, schematischer Darstellung gezeigt. Die Antriebsvorrichtung 37' umfassen jeweils einen endlos umlaufenden Zugmitteltrieb 59, 59', die mit je einem Antriebsmotor 60, wie Elektro-, Pneumatik-, Hydraulik- oder Hybridmotor und dgl., gekuppelt sind. Die Antriebsmotoren 60 sind mit der Steuereinheit verbunden. Die Stellwagen 32 sind jeweils mit einem Trum 61 der Zugmittel 62 bewegungsfest verbunden. Die Antriebsmotoren 60 der beiden Zugmitteltriebe 59, 59' sind entweder jeder für sich separat ansteuerbar, sodass die Stellwagen 32 unabhängig voneinander verfahrbar sind, oder synchronisiert, sodass die Stellwagen 32 wahlweise auch synchron verfahrbar sind. Die fortlaufende Bestimmung der Istpositionen der Stellwagen 32 wird beispielsweise über, an den Antriebsmotoren 60 vorgesehen Resolver als Wegmessvorrichtung ermöglicht. Bei größeren Längen der Speichereinrichtungen 4, 4' ist es zweckmäßig, dass die Stellwagen 32 jeweils entlang einer, in strichlierte Linien dargestellten Führungsbahn 36, insbesondere einer Linearführung, geführt verstellbar ist. Die Führungsbahnen 36 erstrecken sich mit Abstand parallel zueinander und in Längsrichtung der Speichereinrichtungen 4, 4'. Jeder Stellwagen 32 ist wiederum mit wenigstens einer, oben beschriebenen Messeinrichtung 33 ausgestattet. Die Stellwagen 32 sind jeweils oberhalb von oberen Enden 38 der Vorratsmagazine 13 einer jeden Speichereinrichtung 4, 4' angeordnet und über den jeweiligen Zugmitteltrieb 59, 59' zwischen den einzelnen Vorratsmagazinen 13 positioniert verfahrbar. Über die Messeinrichtungen 33 wird die Distanz 41 in zumindest einigen der in Verstellrichtung - gemäß Pfeil 46 - der Stellwagen 32 aufeinander folgenden Vorratsmagazine 13 der Speichereinrichtungen 4, 4' sequentiell erfasst und anhand deren der Füllstand 31 in den betreffenden Vorratsmagazinen 13 ermittelt.

In einer anderen, nicht gezeigten Ausführung ist die Antriebsvorrichtung 37, 37' für den Stellwagen 32 durch einen Zahnrad-Zahnstangenantrieb gebildet. Die Zahnstange ist am Tragrahmen 8 befestigt und das diese kämmende Zahnrad am Stellwagen 32 gelagert, welches an einen Antriebsmotor gekuppelt ist. Ebenso ist ein reibschlüssig wirkender Antrieb des Stellwagens 32 denkbar.

Wie nicht weiters dargestellt, kann die Antriebsvorrichtung 37, 37' für den Stellwagen 32 ebenso durch einen Linearmotor, insbesondere Asynchron- und Synchron-Linearmotor gebildet werden, wie dieser an sich aus dem Stand der Technik bekannt sind. Linearmotoren erlauben die direkte Erzeugung linearer Bewegung ohne Getriebe. Sie bestehen aus einem stromdurchflossenen Primärteil (vergleichbar mit dem Stator eines Rotationsmotors) und einem Reaktionsteil, dem Sekundärteil (vergleichbar mit dem Rotor eines Rotationsmotors). Zweckmäßig ist der Primärteil am Tragrahmen 8, insbesondere am Tragprofil 34 befestigt, während der Sekundärteil an dem entlang einer oben beschriebenen Führungsbahn 36, im Wesentlichen spielfrei geführt verstellbaren Stellwagen 32 angeordnet ist. Der stationäre Primärteil erstreckt sich durchgehend über die gesamte Länge des Verstellweges vom Stellwagen 32. Für den berührungsfreien Antrieb des Stellwagens 32 bietet sich beispielsweise ein Langstator-Synchronmotor an. Dabei wird die Antriebsleistung dem im Verstellweg befindlichen Primärteil zugeführt, während der Stellwagen 32 nur den Erregerteil enthält. Der Erregerteil ist so angeordnet, dass der Stellwagen 32 von den Magnetfeldkräften getragen wird. Auch bei dieser Ausführung ist zwischen dem Stellwagen 32 und dem Tragrahmen 8 ein Positioniersystem, insbesondere eine Wegmessvorrichtung vorgesehen, die mit der Steuereinheit über das oben beschriebene Energie- und Signalübertragungssystem 50 verbunden ist.

Natürlich sind auch alle anderen, aus dem Stand der Technik bekannten Antriebsvorrichtungen 37, 37' einsetzbar, die einen linearen Antrieb des Stellwagens 32 ermöglichen.

Wie aus Gründen der besseren Übersicht nur in Fig. 3 eingetragen, ist jedem Vorratsmagazin 13 der Speichereinrichtungen 4, 4' zumindest eine Bedieneinheit 63 zugeordnet. Diese weist eine Eingabevorrichtung 64 und/oder eine akustische und/oder optische Ausgabevorrichtung 65 und gegebenenfalls eine in strichlierte Linien eingetragene Sende- und Empfangseinheit 66 zur drahtlosen Daten- und/oder Signalübertragung zwischen der Steuereinheit des Rechnersystems und der Bedieneinheit 63 und/oder der betreffenden Messeinrichtung 33 und der Bedieneinheit 63 auf. Die Bedieneinheit 63 ist über eine elektrische Leitung vorzugsweise eines Bussystems oder optische Datenübertragung, beispielsweise Infrarot-Datenübertragung oder Laser-Datenübertragung, mit der Steuereinheit verbunden.

Die Eingabevorrichtung 64 ist beispielsweise eine Tastatur, Touch-Screen oder ein Spracherkennungssystem. Die Ausgabevorrichtung 65 umfasst ein optisches und/oder akustisches Ausgabeelement, beispielsweise in Gestalt einer Warnlampe oder Anzeigetafel, die anzeigt, ob in dem betreffenden Vorratsmagazin 13 ein ausreichender Vorrat an Waren 2 vorhanden ist, oder ob die Gefahr besteht, dass diese Waren 2 mit der Abarbeitung der im Rechnersystem eingegebenen Aufträge alle abgegeben werden, sodass Waren 2 nachgefüllt werden müssen. Ebenso kann die Ausgabevorrichtung 65 ein Sprachausgabemodul und/oder eine numerische und/oder alphanumerische Anzeige, beispielsweise in Gestalt eines Bildschirmes oder einer LED-Anzeige, aufweisen, an der beispielsweise der aktuelle Füllstand 31 oder der aus den (der) im Rechnersystem eingegebenen Aufträgen und/oder prognostizierten Absatzmenge an Waren 2 errechnete Bedarf an weiteren Waren 2 bzw. die erforderliche Nachfüllmenge in den Vorratsmagazinen 13 und usw. ausgegeben wird. Natürlich kann die Eingabevorrichtung 64 und Ausgabevorrichtung 65 auch als kombinierte Baueinheit in Form eines Touch-Screens ausgebildet werden. Die Bedieneinheit 63 ist bevorzugt unmittelbar am betreffenden Vorratsmagazin 13 befestigt.

Andererseits kann die Bedieneinheit 63 auch als mobiles Handbediengerät ausgebildet sein, das mit einer Sende- und Empfangseinheit 66 ausgestattet ist, die über beispielsweise eine optische Signal- bzw. Datenübertragung, insbesondere Infrarot- Datenübertragung oder Laser-Datenübertragung, mit der Steuereinheit und/oder den Messeinrichtungen 33 verbunden ist. Auch ist eine drahtlose Übertragung der Daten und/oder Signale durch eine Funkverbindung zwischen der Bedieneinheit 63 und/oder Steuereinheit und/oder den Messeinrichtungen 33 möglich. Dazu ist Steuereinheit und/oder sind die Messeinrichtungen 33 ebenfalls mit einer Sende- und Empfangseinheit ausgestattet.

Eine andere, nicht gezeigte Ausführung der Vorrichtung 1 zum Bereitstellen von stapelbaren Waren 2 besteht darin, dass diese ausschließlich eine Speichereinrichtung 4 mit den in deren Längsrichtung in einer Reihe fluchtend hintereinander angeordneten, schachtartigen, länglichen Vorratsmagazinen 13, die am unteren Ende 20 eines jeden Vorratsmagazins 13 vorgesehene Abgabevorrichtungen 21 sowie die Erfassungseinrichtung 30 umfasst. Die Erfassungseinrichtung 30 weist wenigstens einen, oberhalb von oberen Enden 38 der Vorratsmagazine 13 angeordneten und über die Antriebsvorrichtung 37, 37' zwischen den einzelnen Vorratsmagazinen 13 in Längsrichtung der Speichereinrichtung 4 positioniert verfahrbaren Stellwagen 32 auf. Der Stellwagen 32 ist mit wenigstens einer Führungsanordnung 35 entlang der in Längsrichtung der Speichereinrichtung 4 verlaufenden und benachbart zu den oberen Ende 38 der Vorratsmagazine 13 angeordneten Führungsbahn 36, insbesondere einer Linearführung 36' geführt. Am Stellwagen 32 ist die wenigstens eine Messeinrichtung 33 angeordnet, über die die Distanz 41 zwischen der im Vorratsmagazin 13 bereitgestellten, obersten Ware 2 und dem maximalen, oberen Füllstandsbegrenzung 42 eines Vorratsmagazins 13 während der Verfahrbewegung des Stellwagens 32 sequentiell erfasst werden kann. Aus der Distanz 41 wird vom Rechnersystem der Füllstand 31 von Waren 2 in den jeweiligen Vorratsmagazinen 13 errechnet. Die Messeinrichtung 33 ist quer zur Führungsbahn 36 in Richtung der Speichereinrichtung 4 versetzt und oberhalb von oberen Enden 38 der Vorratsmagazine 13 der Speichereinrichtungen 4 angeordnet sowie derart ausgerichtet, dass ein von der Messeinrichtung 33 ausgesandter Abtaststrahl 39 oder eine ausgestrahlte Abtastwelle im Wesentlichen senkrecht auf die Abgabeebene 24 der Abgabevorrichtung 21 verläuft. Die Vorrichtung 1 bildet nach dieser Ausführung beispielsweise einen Verkaufsautomaten aus, bei dem die gewünschte Ware 2 über eine Abgabeöffnung direkt an den Verbraucher abgegeben wird. Die Vorratsmagazine 13 sind nach dieser Ausführung beispielsweise lotrecht ausgerichtet.

Im Nachfolgenden wird nun das Verfahren zur Bereitstellung von stapelbaren Waren 2 für die voran beschriebene Vorrichtung 1 beschrieben. Es wird davon ausgegangen, dass die Waren 2 sortenrein in den Vorratsmagazinen 13 bereitgestellt werden, daher, dass in jedem Vorratsmagazin 13 nur eine Sorte bzw. Type von Ware 2 eingeordnet wird. Grundsätzlich kann die Kommissionierung von Waren 2 auf zwei unterschiedliche Arten erfolgen. Zum einen können Warenträger, insbesondere Transportbehälter, entlang der Fördereinrichtung 3 transportiert werden. Diese Warenträger sind dazu mit einer, einem in das Rechnersystem eingegebenen Auftrag zugeordneten Codierung versehen. Die Codierung umfasst eine Identifikationsnummer, über die eine eindeutige Zuordnung des Warenträgers zu einem Auftrag möglich ist. Die Warenträger werden entlang der Fördereinrichtung 3 transportiert und an einer Vielzahl von beidseitig der Fördereinrichtung 3 angeordneten Vorratsmagazinen 13 vorbeigeführt und während des Vorbeitransportes an den Vorratsmagazinen 13 mit den, der jeweiligen Codierung zugeordneten Waren 4 beladen. Entsprechend der Zuordnung der Codierung eines Warenträgers, werden die Abgabevorrichtungen 21 vom Rechnersystem angesteuert und über diese die vereinzelten Waren 2 an den Transportbehälter abgegeben.

Zum anderen, werden die entsprechend den eingegebenen Aufträgen zu kommissionierenden Waren 2, unmittelbar am Förderorgan 5 der Fördereinrichtung 3 abgelegt. Dazu werden während dem das Förderorgan 5 unter den Vorratsmagazinen 13 vorbeibewegt wird, jene Abgabevorrichtungen 21 angesteuert, über welche die zu kommissionierenden Waren 2 aus den Vorratsmagazinen 13 ausgegeben werden sollen. Die abgegebenen Waren 2 sind am Förderorgan 5 auftragsgebunden zusammengefasst. Am Abgabeende der ersten Fördereinrichtung 3 ist eine zweite Fördereinrichtung (nicht dargestellt) zum Transportieren von zu Aufträgen zusammengefassten, kommissionierten Waren 2 in Warenträgern angeordnet. In einem Warenträger werden die Waren 2 eines Auftrags aufgenommen.

Um einen Stillstand der Vorrichtung 1, der ausgelöst wird, wenn aus einem leeren Vorratsmagazin 13 eine Ware 2 angefordert wird und deshalb der in das Rechnersystem eingegebene, zumindest eine Auftrag nicht erfüllt werden kann, zu verhindern, muss dafür gesorgt werden, dass zumindest in jenen Vorratsmagazinen 13, in denen die für den Auftrag angeforderten Waren 2 enthalten sind, ausreichend aufgefüllt sind.

Erfindungsgemäß ist es nun vorgesehen, dass die Distanz 41 zwischen der obersten Ware 2 und der maximalen, oberen Füllstandsbegrenzung 42 nach Vorgabe wenigstens eines Auftrages oder einer prognostizierten Absatzmenge an Waren 2 in einem oder mehreren Vorratsmagazinen 13 erfasst und daraus der Füllstand 44 bzw. Istbestand an Waren 2 in einem oder mehreren Vorratsmagazinen 13 ermittelt werden.

Wird ein Auftrag, der nur eine Sorte von (identischen) Ware 2 umfasst, in das Rechnersystem elektronisch eingegeben, wird vom Rechnersystem, entsprechend diesem Auftrag ein Sollbestand, daher die Anzahl an benötigten Waren 2 für jenes Vorratsmagazin 13 errechnet, in welchem die dem Auftrag zugeordnete Ware 2 bereitgestellt ist. Danach wird über die Messeinrichtung 33 auf berührungslosen Wege die oben beschriebene Distanz 41 erfasst und daraus der Füllstand 31 sowie unter Einbeziehung der Abmessungen 45 in Stapelrichtung der übereinander gestapelten Waren 2 der Istbestand an Waren 2 in diesem Vorratsmagazin 13 errechnet. Diese Berechnung wird vom Rechnersystem, insbesondere der Steuereinheit, durchgeführt. Darauf folgend wird der Istbestand an Waren 2 mit dem aus dem Auftrag für das Vorratsmagazin 13 errechneten Sollbestand an Waren 2 verglichen. Ist der Istbestand an Waren 2 geringer als der für die ordnungsgemäße Abarbeitung des Auftrags benötigte Sollbestand an Waren 2 und/oder wird der Sollbestand an Waren 2 in Kürze unterschritten werden, wird eine Bedarfsmeldung für die Bedienperson am Rechnersystem, insbesondere einem Rechner (PC), und/oder an der Ausgabevorrichtung 65 der Bedieneinheit 63 ausgegebenen und die Bedienperson aufgefordert, dieses Vorratsmagazin 13 aufzufüllen. Die Bedarfsmeldung kann als Sprachinformation oder optisch oder akustisch erfolgen, beispielsweise durch eine Warnlampe, Text- oder Nummernanzeige oder Signalhorn.

Umfasst der eingegebene Auftrag mehrere, unterschiedliche Waren 2, wird der Sollbestand an Waren 2 entsprechend dem eingegebenen Auftrag an jenen Vorratsmagazinen 13 vom Rechnersystem errechnet, in welchem die unterschiedlichen Waren 2 bereitgestellt werden. Beispielsweise ist die erste Sorte von Ware 2 im ersten Vorratsmagazin 13 und die zweite Sorte von Ware 2 im zweiten Vorratsmagazin 13 usw. bereitgestellt. Darauf folgend wird über die Messeinrichtung 33 auf berührungslosen Wege in diesen betreffenden Vorratsmagazinen 13 jeweils die Distanz 41 sequentiell erfasst und jeder aktuelle Füllstand 31 sowie unter Einbeziehung der Abmessungen 45 in Stapelrichtung der übereinander gestapelten Waren 2 der Istbestand an Waren 2 in diesen betreffenden Vorratsmagazinen 13 ermittelt. Danach erfolgt ein Vergleich des Istbestands an Waren 2 in den betreffenden Vorratsmagazinen 13 mit dem errechneten Sollbestand für diese betreffenden Vorratsmagazine 13. Eine Bedarfsmeldung für die Bedienperson zum Nachfüllen eines oder mehrerer Vorratsmagazine 13, wird nur dann ausgegeben, wenn in einem der Vorratsmagazine 13 der Istbestand an Waren 2 den Sollbestand der zu dem eingegebenen Auftrag angeforderten, unterschiedlichen Waren 2 unterschreitet und/oder in Kürze unterschreiten wird.

Wird ein dem ersten Auftrag nachfolgender, zweiter, dritter usw. Auftrag in das Rechnersystem eingegeben, wird vorerst vom Rechnersystem anhand aller Aufträge, ein benötigter Sollbestand an gleichen oder unterschiedlichen Waren 2 in einem Vorratsmagazin 13 oder mehreren Vorratsmagazinen 13 ermittelt. Enthält der Auftrag nur eine Sorte von Ware 2, wird die Distanz 41 zwischen der obersten Ware 2 und der oberen Füllstandsbegrenzung 42 in diesem einen Vorratsmagazin 13 gemessen, während, wenn der Auftrag unterschiedliche Sorten von Waren 2 umfasst, die Distanz 41 zwischen der obersten Waren 2 und der maximalen, oberen Füllstandsbegrenzung 42 in jenen Vorratsmagazinen 13 sequentiell gemessen wird, wo die unterschiedlichen Waren 2 bereitgestellt werden. Dementsprechend werden der aktuelle Füllstand 31 sowie der Istbestand an Waren 2 in nur einem Vorratsmagazin 13 oder mehreren Vorratsmagazinen 13 vom Rechnersystem errechnet. Danach erfolgt der Vergleich zwischen dem Istbestand an Waren 2 in dem einen betreffenden Vorratsmagazin 13 oder in den betreffenden Vorratsmagazinen 13 mit dem Sollbestand für dieses eine betreffende Vorratsmagazin 13 oder die betreffenden Vorratsmagazine 13. Eine Bedarfsmeldung eines Vorratsmagazins 13 wird am Rechnersystem und/oder an der Bedieneinheit 63 ausgegeben, wenn in dem betreffenden Vorratsmagazin 13 oder in einem der betreffenden Vorratsmagazine 13 der Istbestand an Waren 2 den Sollbestand der für alle eingegebenen Aufträge angeforderten Waren 2 unterschreitet und/oder in Kürze unterschreiten wird.

Eine optimale Ressourcenplanung an Bedienpersonen wird dann erreicht, wenn in das Rechnersystem eine prognostizierte Absatzmenge von wenigstens einer Sorte Ware 2 innerhalb eines gesetzten Zeitfensters, beispielsweise ein Tag, eine Woche, elektronisch erfasst wird. Die prognostizierte Absatzmenge beruht auf Basis von Erfahrungswerten bzw. statistischen Auswertungen. Die Eingabe in das Rechnersystem erfolgt als quantitative Menge. Beispielsweise wurden von einer Warensorte in einer Woche 100 Stück Waren 2 benötigt. Anhand der prognostizierten Absatzmenge, wird der benötigte Sollbestand an Waren 2 in einem betreffenden Vorratsmagazin 3 vom Rechnersystem ermittelt, in diesem Fall 100 Waren 2. Danach wird über die Messeinrichtung 33 auf berührungslosen Wege die oben beschriebene Distanz 41 erfasst und daraus der Füllstand 31 sowie unter Einbeziehung der Abmessungen 45 in Stapelrichtung der übereinander gestapelten Waren 2 der Istbestand an Waren 2 in diesem Vorratsmagazin 13 errechnet. Sodann erfolgt ein Vergleich des Istbestands an Waren 2 in diesem betreffenden Vorratsmagazin 13 mit dem aus der prognostizierten Absatzmenge für dieses Vorratsmagazin 13 berechneten Sollbestand. Wird der für die prognostizierte Absatzmenge errechnete Sollbestand unterschritten und/oder in Kürze unterschritten werden, wird eine Bedarfsmeldung an die Bedienperson abgegebenen und das betreffende Vorratsmagazin 13 muss nachgefüllt werden.

Wird in das Rechnersystem eine prognostizierte Absatzmenge für mehrere unterschiedliche Waren 2 für ein gesetztes Zeitfensters eingegeben, wird entsprechend der prognostizierten Absatzmenge ein benötigter Sollbestand an unterschiedlichen Waren 2 in den betreffenden Vorratsmagazinen 13 vom Rechnersystem errechnet. Darauf folgend wird wiederum in diesen betreffenden Vorratsmagazinen 13 jeweils die Distanz 41 auf berührungslosem Wege sequentiell gemessen und jeder Istbestand an Waren 2 in diesen betreffenden Vorratsmagazinen 13 vom Rechnersystem errechnet. Nach dem Vergleich vom Istbestand an Waren 2 in diesen betreffenden Vorratsmagazinen 13 mit dem für diese betreffenden Vorratsmagazine 13 errechneten Sollbestand, wird eine Bedarfsmeldung an die Bedienperson zum Nachfüllen eines Vorratsmagazins 13 dann ausgegeben, wenn der Istbestand an Waren 2 den Sollbestand der für die prognostizierte Absatzmenge benötigten, unterschiedlichen Waren 2 unterschreitet und/oder in Kürze unterschreiten wird.

Es sei an dieser Stelle darauf hingewiesen, dass die Eingabe der Aufträge und prognostizierten Absatzmenge an Waren 2 über eine Eingabevorrichtung, wie Tastatur, Touch-Screen, Spracheingabe und dgl. an einem Rechner (Personal Computer) des Rechnersystems erfolgt.

Schließlich wird nach dem Nachfüllvorgang neuerlich der Istbestand an Waren 2 in diesem einen aufgefüllten Vorratsmagazin 13 oder in den betreffenden, aufgefüllten Vorratsmagazinen 13 aus der über die Messeinrichtung 33 erfassten Distanz 41 ermittelt und die Bedarfsmeldung aufgehoben, solange, bis der Istbestand an Waren 2 wieder den Sollbestand an Waren 2 unterschreitet. Dadurch können zusätzliche Quittiertasten zum Bestätigen eines Nachfüllvorgangs an der Bedieneinheit 63 entfallen.

Die Distanz 41 zur Ermittlung der Füllstände 31 in einem Vorratsmagazin 13 oder mehreren Vorratsmagazinen 13, kann über den oben beschriebenen und mit den Messeinrichtungen 33 versehenen Stellwagen 32 oder über an jedem Vorratsmagazin 13 ortsfest, angeordnete Messeinrichtungen (nicht dargestellt) erfasst werden. Nach letzterer Ausführung, wird die Messeinrichtung 33 am oberen Ende 38 mit geringem Abstand oberhalb der maximalen, oberen Füllstandsbegrenzung 42 jedes Vorratsmagazins 13 befestigt. Diese Messeinrichtungen sind wiederum durch opto-elektronische Messsysteme, wie Laser- oder Infrarot-Messsysteme, oder Ultraschallsensoren gebildet, wobei ein Abtaststrahl oder eine Abtastwelle der Messeinrichtung 33 im Wesentlichen parallel zur Längserstreckung der Vorratsmagazine 13 und im Wesentlichen senkrecht zur Abgabeebene 24 der Abgabevorrichtung 21 verläuft.

Die Distanz 41 wird, wie oben beschrieben, nur an jenem Vorratsmagazin 13 oder jenen Vorratsmagazinen 13 gemessen, in dem oder denen die Waren 2 bereitgestellt sind, die für den (die) in das Rechnersystem eingegebenen Auftrag (Aufträge) oder die in das Rechnersystem eingegebene, prognostizierte Absatzmenge an Waren 2 angefordert werden.

Andererseits ist es aber auch möglich, dass die Distanz 41 zwischen der obersten Ware 2 und der maximalen, oberen Füllstandsbegrenzung 42 in jedem Vorratsmagazin 13 der Speichereinrichtungen 4, 4' erfasst und die zugehörigen Füllstände 31 ermittelt werden. Dazu ist es nun vorgesehen, dass über die Messeinrichtungen 33 jeweils die Distanz 41 in den Vorratsmagazinen 13 der Speichereinrichtung 4, 4' ständig gemessen und der Istbestand in den Vorratsmagazinen 13 fortlaufend ermittelt werden. Andererseits kann aber auch die Distanz 41 in den Vorratsmagazinen 13 der Speichereinrichtung 4, 4' intermittierend erfasst und der aktuelle Istbestand in den Vorratsmagazinen 13 nach vorgegebenen Zeitintervallen fortlaufend ermittelt werden.

In einer möglichen Ausführung wird die Distanz 41 über am Stellwagen 32 befestigte Messeinrichtungen 33 erfasst, wobei eine Messeinrichtung 33 je einer Speichereinrichtung 4, 4' zugeordnet ist. Dazu wird der Stellwagen 32 in die Messposition oberhalb eines Vorratsmagazins 13 verfahren und die Distanz 41 zur Bestimmung des Istbestands dieses Vorratsmagazins 13 gemessen. Ist von einem weiteren Vorratsmagazin 13 der Istbestand zu ermitteln, wird der Stellwagen 32 in die weitere Messposition oberhalb eines weiteren Vorratsmagazins 13 verfahren. Der Stellwagen 32 fährt nur jenes Vorratsmagazin 13 oder jene Vorratsmagazine 13 an, in dem oder denen die für einen eingegebenen Auftrag oder eine eingegebene, prognostizierte Warenabsatzmenge zu kommissionierenden Waren 2 bereitgestellt sind. In einer anderen Variante der Ansteuerung, wird der Stellwagen 32 zwischen dem in dessen Verstellrichtung - gemäß Pfeil 46 - ersten und letzten Vorratsmagazin 13 fortlaufend pendelnd hin und her verfahren und dabei die Distanz 41 zur Ermittlung des Istbestands in einem Vorratsmagazin 13 oder in einem jeden Vorratsmagazin 13 erfasst.

Die Ausführungsbeispiele zeigen mögliche Ausführungsvarianten der Vorrichtung 1, wobei an dieser Stelle bemerkt sei, dass die Erfindung nicht auf die speziell dargestellten Ausführungsvarianten derselben eingeschränkt ist, sondern vielmehr auch diverse Kombinationen der einzelnen Ausführungsvarianten untereinander möglich sind.

Der Ordnung halber sei abschließend darauf hingewiesen, dass zum besseren Verständnis des Aufbaus der Vorrichtung 1, diese bzw. deren Bestandteile teilweise unmaßstäblich und/oder vergrößert und/oder verkleinert dargestellt wurden.

### Bezugszeichenaufstellung

- 1: Vorrichtung
- 2: Ware
- 3: Fördereinrichtung
- 4: Speichereinrichtung
- 4': Speichereinrichtung
- 5: Förderorgan

- 6: Antrieb
- 7: Pfeil
- 8: Tragrahmen
- 9: Steher
- 10: Aufstandsfläche

- 11: Längsträger
- 12: Symmetrieebene
- 13: Vorratsmagazin
- 14: Befestigungsklemme
- 15: Basis

- 16: Schenkel
- 17: Neigungswinkel
- 18: Neigungswinkel
- 19: Warennachfüllöffnung
- 20: unteres Ende

- 21: Abgabevorrichtung
- 22: Mitnehmer
- 23: Warenstapel
- 24: Abgabeebene
- 24': Abgabeöffnung
- 25: Zugmittel

- 26: Antriebsrad
- 27: Umlenkrad
- 28: Führungsblech
- 30: Erfassungseinrichtung

- 31: Füllstand
- 32: Stellwagen
- 33: Messeinrichtung
- 34: Tragprofil
- 35: Führungsanordnung

- 36: Führungsbahn
- 36': Linearführung
- 37: Antriebsvorrichtung
- 37': Antriebsvorrichtung
- 38: oberes Ende
- 39: Abtaststrahl
- 40: Füllraum

- 41: Distanz
- 42: Füllstandsbegrenzung
- 42': Füllstandsbegrenzung
- 43: Oberfläche
- 44: Füllhöhe
- 45: Abmessung

- 46: Pfeil
- 47: Rahmengehäuse
- 48: Gehäuseteil
- 49: Aufnahmekanal
- 50: Energie- und Signalübertragungssystem

- 51: Innenwand
- 52: Stützwand
- 53: Zugmittel
- 54: Antriebsrad
- 55: Rad
- 55': Andrückrad

- 56: Antriebsmotor
- 57: Energiekette
- 58: Positioniersystem
- 59: Zugmitteltrieb
- 59': Zugmitteltrieb
- 60: Antriebsmotor

- 61: Trum
- 62: Zugmittel
- 63: Bedieneinheit
- 64: Eingabevorrichtung
- 65: Ausgabevorrichtung

- 66: Sende- und Empfangseinheit

## Patentansprüche

1. Vorrichtung (1) zur Bereitstellung von stapelbaren Waren (2) in schachtartigen Vorratsmagazinen (13) wenigstens einer Speichereinrichtung (4) und Überwachung des Füllstandes (31) in den Vorratsmagazinen (13) mittels einer Erfassungseinrichtung (30), welche Vorratsmagazine (13) in Längsrichtung der Speichereinrichtung (4) in einer Reihe fluchtend hintereinander angeordnet und jeweils durch ein Führungsprofil gebildet sind, gegen das die in einem Vorratsmagazin (13) übereinander gestapelten Waren (2) bereichsweise anliegen, und am unteren Ende (20) eines jeden Vorratsmagazins (13) von einem Rechnersystem gesteuerte Abgabevorrichtungen (21) vorgesehen sind und die Erfassungseinrichtung (30) mit dem Rechnersystem verbunden ist, **dadurch gekennzeichnet, dass** die Erfassungseinrichtung (30) wenigstens einen oberhalb von oberen Ende (38) der Vorratsmagazine (13) angeordneten und über zumindest eine Antriebsvorrichtung (37; 37') zwischen den einzelnen Vorratsmagazinen (13) in Längsrichtung der Speichereinrichtung (4) verfahrbaren Stellwagen (32) aufweist, der mit wenigstens einer die Distanz (41) zwischen der von der Abgabevorrichtung (21) am weitesten entfernt liegenden, obersten Ware (2) und einer maximalen, oberen Füllstandsbegrenzung (42) eines Vorratsmagazins (13) zur Bestimmung des Füllstandes (31) von Waren (2) in wenigstens einem der Vorratsmagazine (13) erfassenden Messeinrichtung (33) versehen ist.

2. Vorrichtung nach Anspruch 1, **dadurch gekennzeichnet, dass** der Stellwagen (32) wenigstens eine Führungsanordnung (35) aufweist, mit der er auf einer in Längsrichtung der Speichereinrichtung (4) verlaufenden und benachbart zu den oberen Ende (38) der Vorratsmagazine (13) angeordneten Führungsbahn (36) geführt ist.

3. Vorrichtung nach Anspruch 2, **dadurch gekennzeichnet, dass** die Führungsbahn (36) durch wenigstens eine Linearführung (36') gebildet ist und dass der Stellwagen (32) über die Führungsanordnung (35) an der Linearführung (36') gelagert und über die Antriebsvorrichtung (37; 37') verstellbar auf einem Tragrahmen (8) der Vorrichtung (1) angeordnet ist.

4. Vorrichtung nach Anspruch 1, **dadurch gekennzeichnet, dass** die Antriebsvorrichtung (37; 37') durch einen mit einem Antriebsmotor (56; 60) gekuppelten Zugmitteltrieb, Reibradantrieb, Zahnrad-Zahnstangenantrieb oder Linearantrieb gebildet ist und dass der Antriebsmotor (56; 60) mit einer Steuereinheit des Rechnersystems verbunden ist.

5. Vorrichtung nach Anspruch 1, **dadurch gekennzeichnet, dass** die Messeinrichtung (33) durch ein die Distanz (41) berührungslos erfassendes Messsystem gebildet ist.

6. Vorrichtung nach Anspruch 5, **dadurch gekennzeichnet, dass** die Messeinrichtung (33) durch ein opto-elektronisches Messsystem, insbesondere Laser- oder Infrarot-Messsystem, gebildet ist und ein Abtaststrahl (39) der Messeinrichtung (33) im Wesentlichen parallel zur Längserstreckung der Vorratsmagazine (13) und im Wesentlichen senkrecht zur Abgabeebene (24) der Abgabevorrichtung (21) verläuft.

7. Vorrichtung nach Anspruch 5, **dadurch gekennzeichnet, dass** die Messeinrichtung (33) durch einen Ultraschallsensor gebildet ist und Ultraschallwellen der Messeinrichtung (33) im Wesentlichen parallel zur Längserstreckung der Vorratsmagazine (13) und im Wesentlichen senkrecht zur Abgabeebene (24) der Abgabevorrichtung (21) verlaufen.

8. Vorrichtung nach Anspruch 1, **dadurch gekennzeichnet, dass** ein Positioniersystem (58) für die Positionierung und Erfassung der Istposition des Stellwagens (32) gegenüber den einzelnen Vorratsmagazinen (13) vorgesehen ist.

9. Vorrichtung nach Anspruch 8, **dadurch gekennzeichnet, dass** das Positioniersystem (58) eine Wegmessvorrichtung oder ein Positionsortungssystem zur Erfassung der Relativlage des Stellwagens (32) gegenüber den einzelnen Vorratsmagazinen (13) umfasst.

10. Vorrichtung nach Anspruch 4 und 9, **dadurch gekennzeichnet, dass** der Antriebsmotor (56; 60) die Wegmessvorrichtung aufweist oder die Wegmessvorrichtung zwischen dem Stellwagen (32) und einem Tragrahmen (8) der Vorrichtung (1) angeordnet ist.

11. Vorrichtung nach Anspruch 9, **dadurch gekennzeichnet, dass** das Positionsortungssystem durch eine Navigationsvorrichtung, insbesondere GPS, gebildet ist, bestehend aus einer Sende- und/oder Empfangseinrichtung angeordnet am Stellwagen (32) und einer Sende- und/ oder Empfangseinrichtung angeordnet im Aufstellbereich der Vorrichtung (I).

12. Vorrichtung nach Anspruch 1, **dadurch gekennzeichnet, dass** eine zweite Speichereinrichtung (4') in Bezug auf eine vertikale Symmetrieebene (12) der ersten Speichereinrichtung (4) gegenüberliegend angeordnet ist, wobei die zweite Speichereinrichtung (4') in deren Längsrichtung in einer Reihe fluchtend hintereinander angeordnete, schachtartige, längliche Vorratsmagazine (13) aufweist und am unteren Ende (20) eines jeden Vorratsmagazins (13) eine Abgabevorrichtung (21) vorgesehen ist und dass sich zwischen den beiden Speichereinrichtungen (4, 4') parallel zu deren Längsrichtung eine geringfügig unterhalb des unteren Endes (20) der Vorratsmagazine (13) angeordnete Fördereinrichtung (3), insbesondere ein Bandförderer, erstreckt, wobei eine Abgaberichtung jeder Abgabevorrichtung (21) quer zur Längsrichtung der Fördereinrichtung (3) verläuft.

13. Vorrichtung nach Anspruch 12, **dadurch gekennzeichnet, dass** die Speichereinrichtungen (4, 4') zu beiden Seiten der Führungsbahn (36) angeordnet sind, wobei die Führungsbahn (36) sich benachbart zu den oberen Ende (38) der gegenüberliegenden Vorratsmagazine (13) parallel in Längsrichtung der Speichereinrichtungen (4, 4') über die gesamte Länge der Vorrichtung (1) durchgehend erstreckt und dass der Stellwagen (32) mit zwei jeweils quer zur Führungsbahn (36) in Richtung der Speichereinrichtungen (4, 4') versetzt und oberhalb von den Vorratsmagazinen (13) der Speichereinrichtungen (4, 4') angeordneten Messeinrichtungen (33) zum Erfassen der Distanz (41) in den betreffenden Vorratsmagazinen (13) der Speichereinrichtungen (4, 4') versehen ist.

14. Vorrichtung nach Anspruch 12, **dadurch gekennzeichnet, dass** die Vorratsmagazine (13) der Speichereinrichtungen (4, 4') zu einer horizontalen Förderebene der Fördereinrichtung (3) hin und gegebenenfalls auch in Längsrichtung der Fördereinrichtung (3) geneigt sind.

15. Vorrichtung nach Anspruch 1, 12 oder 13, **dadurch gekennzeichnet, dass** die Vorratsmagazine (13) und die Führungsbahn (36) an einem gemeinsamen Tragrahmen (8) der Vorrichtung (1) befestigt sind und dass das Führungsprofil der Vorratsmagazine (13) U-förmig ausgebildet und an stirnseitigen Enden (20, 38) geöffnet ist, wobei eine Basis (15) dem Tragrahmen (8) zugewandt ist und von der Basis (15) vorkragende, parallele Schenkeln (16) eine schlitzartige Warennachfüllöffnung (19) begrenzen.

16. Vorrichtung nach Anspruch 1, 5 bis 7, **dadurch gekennzeichnet, dass** die wenigstens eine Messeinrichtung (33) mit einer Steuereinheit vom Rechnersystem eines Lagerverwaltungssystems und/oder einer Bedieneinheit (63) verbunden ist.

17. Vorrichtung nach einem der Ansprüche 1 bis 16, **dadurch gekennzeichnet, dass** je Vorratsmagazin (13) eine Bedieneinheit (63) vorgesehen ist, die wenigstens eine Eingabevorrichtung (64) und/oder Ausgabevorrichtung (65) mit einem akustischen und/oder optischen Ausgabeelement, beispielsweise Signalhorn und/oder Warnlampe, und/oder Sprachausgabemodul aufweist.

18. Vorrichtung nach Anspruch 1, **dadurch gekennzeichnet, dass** die wenigstens eine Messeinrichtung (33) und die Steuereinheit vom Rechnersystem des Lagerverwaltungssystems und/oder die Bedieneinheit (63) und/oder die Antriebsvorrichtung (37, 37'), insbesondere die Steuerung des Antriebsmotors (56; 60), jeweils mit einer Sende- und Empfangseinheit zur gegenseitigen drahtlosen Daten- und/oder Signalübertragung versehen sind.

19. Verfahren zur Bereitstellung von stapelbaren Waren (2) in schachtartigen Vorratsmagazinen (13) wenigstens einer Speichereinrichtung (4) und Überwachung des Füllstandes (31) in den Vorratsmagazinen (13) mittels einer Erfassungseinrichtung (30), bei dem vorerst die Waren (2) in den in einer Reihe hintereinander angeordneten, schachtartigen Vorratsmagazinen (13) übereinander gestapelt und danach über am unteren Ende (20) eines jeden Vorratsmagazins (13) angeordnete, von einem Rechnersystem gesteuerte Abgabevorrichtungen. (21) vereinzelt ausgegebenen werden, **dadurch gekennzeichnet, dass** ein die Erfassungseinrichtung (30) aufweisender Stellwagen (32) in Längsrichtung der Speichereinrichtung (4) oberhalb von oberen Enden (38) der Vorratsmagazine (13) zwischen den in Verstellrichtung (46) des Stellwagens (32) aufeinander folgenden Vorratsmagazinen (13) verfahren wird und während der Verstellbewegung vom Stellwagen (31) über wenigstens eine an diesem angeordnete, die Erfassungseinrichtung (30) aufweisende Messeinrichtung (33) zumindest in einem der Vorratsmagazine (13) eine Distanz (41) zwischen der von der Abgabevorrichtung (21) am weitesten entfernt liegenden, obersten Ware (2) und einer maximalen, oberen Füllstandsbegrenzung (42) eines Vorratsmagazins (13) erfasst und danach der Füllstand (31) in diesem betreffenden Vorratsmagazin (13) vom Rechnersystem ermittelt werden.

20. Verfahren nach Anspruch 19, **dadurch gekennzeichnet, dass** vorerst in an sich bekannter Weise vom Rechnersystem wenigstens ein zumindest eine Sorte von Ware (2) umfassender Auftrag elektronisch erfasst wird, worauf entsprechend dem Auftrag ein benötigter Sollbestand an Waren (2) im betreffenden Vorratsmagazin (13) vom Rechnersystem errechnet wird, sodann in zumindest dem einen, die Waren (2) für diesen Auftrag enthaltenen Vorratsmagazin (13) eine Distanz (41) zwischen der von der Abgabevorrichtung (21) am weitesten entfernt liegenden, obersten Ware (2) und einer maximalen, oberen Füllstandsbegrenzung (42) eines Vorratsmagazins (13) auf berührungslosem Wege gemessen, der aktuelle Füllstand (31) in diesem betreffenden Vorratsmagazin (13) ermittelt und unter Einbeziehung der Abmessungen (45) in Stapelrichtung der übereinander gestapelten Waren (2) der Istbestand an Waren (2) in diesem betreffenden Vorratsmagazin (13) vom. Rechnersystem errechnet werden und darauf folgend der Istbestand an Waren (2) mit dem Sollbestand für dieses betreffende Vorratsmagazin (13) verglichen wird und dass eine Bedarfsmeldung für eine Bedienperson zum Nachfüllen des betreffenden Vorratsmagazins (13) am Rechnersystem und/ oder an einer Bedieneinheit (63) ausgegeben wird, wenn der Istbestand an Waren (2) den Sollbestand der für den eingegebenen Auftrag benötigten Waren (2) unterschreitet und/oder in Kürze unterschreiten wird.

21. Verfahren nach Anspruch 19, **dadurch gekennzeichnet, dass** vorerst vom Rechnersystem eine prognostizierte Absatzmenge von wenigstens einer Sorte Ware (2) innerhalb eines gesetzten Zeitfensters elektronisch erfasst wird, worauf entsprechend der prognostizierten Absatzmenge ein benötigter Sollbestand an Waren (2) in dem betreffenden Vorratsmagazin (13) vom Rechnersystem errechnet wird, sodann in diesem betreffenden Vorratsmagazin (13) eine Distanz (41) zwischen der von der Abgabevorrichtung (21) am weitesten entfernt liegenden, obersten Ware (2) und einer maximalen, oberen Füllstandsbegrenzung (42) eines Vorratsmagazins (13) auf berührungslosem Wege gemessen, der aktuelle Füllstand (31) in diesem betreffenden Vorratsmagazin (13) ermittelt und unter Einbeziehung der Abmessungen (45) in Stapelrichtung der übereinander gestapelten Waren (2) der Istbestand an Waren (2) in diesem betreffenden Vorratsmagazin (13) vom Rechnersystem errechnet werden und darauf folgend der Istbestand an Waren (2) mit dem Sollbestand für dieses betreffende Vorratsmagazin (13) verglichen wird und dass eine Bedarfsmeldung für eine Bedienperson zum Nachfüllen des betreffenden Vorratsmagazins (13) am Rechnersystem und/oder an einer Bedieneinheit (63) ausgegeben wird, wenn der Istbestand an Waren (2) den Sollbestand der für die prognostizierte Absatzmenge benötigten Waren (2) unterschreitet und/oder in Kürze unterschreiten wird.

22. Verfahren nach Anspruch 21, **dadurch gekennzeichnet, dass** vorerst vom Rechnersystem eine prognostizierte Absatzmenge von mehreren unterschiedlichen Waren (2) innerhalb eines gesetzten Zeitfensters elektronisch erfasst wird, worauf entsprechend der prognostizierten Absatzmenge ein benötigter Sollbestand an Waren (2) in den betreffenden Vorratsmagazinen (13) vom Rechnersystem errechnet werden, sodann in diesen betreffenden Vorratsmagazinen (13) jeweils eine Distanz (41) zwischen der von der Abgabevorrichtung (21) am weitesten entfernt liegenden, obersten Ware (2) und einer maximalen, oberen Füllstandsbegrenzung (42) eines Vorratsmagazins (13) auf berührungslosem Wege gemessen, jeweils der aktuelle Füllstand (31) in den betreffenden Vorratsmagazinen (13) ermittelt und unter Einbeziehung der Abmessungen (45) in Stapelrichtung der übereinander gestapelten Waren (2) der Istbestand an Waren (2) in diesen betreffenden Vorratsmagazinen (13) vom Rechnersystem errechnet werden und darauf folgend jeweils der Istbestand an Waren (2) mit dem Sollbestand für diese betreffenden Vorratsmagazine (13) verglichen werden und dass eine Bedarfsmeldung für eine Bedienperson zum Nachfüllen des betreffenden Vorratsmagazins (13) am Rechnersystem und/oder an einer Bedieneinheit (63) ausgegeben wird, wenn der Istbestand an Waren (2) den Sollbestand der für die prognostizierte Absatzmenge benötigten, unterschiedlichen Waren (2) unterschreitet und/oder in Kürze unterschreiten wird.

23. Verfahren nach Anspruch 20, **dadurch gekennzeichnet, dass** vorerst in an sich bekannter Weise vom Rechnersystem wenigstens ein mehrere unterschiedliche Waren (2) umfassender Auftrag elektronisch erfasst wird, worauf entsprechend dem Auftrag ein benötigter Sollbestand an Waren (2) in den betreffenden Vorratsmagazinen (13) vom Rechnersystem errechnet wird, sodann in zumindest den, die Waren (2) für diesen Auftrag enthaltenen Vorratsmagazinen (13) jeweils eine Distanz (41) zwischen der von der Abgabevorrichtung (21) am weitesten entfernt liegenden, obersten Ware (2) und einer maximalen, oberen Füllstandsbegrenzung (42) der Vorratsmagazine (13) auf berührungslosem Wege gemessen, jeweils der aktuelle Füllstand (31) in diesen betreffenden Vorratsmagazinen (13) ermittelt und unter Einbeziehung der Abmessungen (45) in Stapelrichtung der übereinander gestapelten Waren (2) der Istbestand an Waren (2) in diesen betreffenden Vorratsmagazinen (13) vom Rechnersystem errechnet werden und darauf folgend jeweils der Istbestand an Waren (2) mit dem Sollbestand für diese betreffenden Vorratsmagazine (13) verglichen werden und dass eine Bedarfsmeldung für eine Bedienperson zum Nachfüllen des betreffenden Vorratsmagazins (13) am Rechnersystem und/oder an einer Bedieneinheit (63) ausgegeben wird, wenn in einem der Vorratsmagazine (13) der Istbestand an Waren (2) den Sollbestand der für den eingegebenen Auftrag benötigten Waren (2) unterschreitet und/oder in Kürze unterschreiten wird.

24. Verfahren nach Anspruch 20, **dadurch gekennzeichnet, dass** nach dem elektronischen Erfassen des ersten Auftrags und wenigstens eines weiteren Auftrags vom Rechnersystem entsprechend den Aufträgen ein benötigter Sollbestand an Waren (2) in den betreffenden Vorratsmagazinen (13) vom Rechnersystem errechnet wird, sodann in zumindest den, die Waren (2) für diese Aufträge enthaltenen Vorratsmagazinen (13) jeweils eine Distanz (41) zwischen der von der Abgabevorrichtung (21) am weitesten entfernt liegenden, obersten Ware (2) und einer maximalen, oberen Füllstandsbegrenzung (42) der Vorratsmagazine (13) auf berührungslosem Wege gemessen, der jeweilige aktuelle Füllstand (31) in diesen betreffenden Vorratsmagazinen (13) ermittelt und unter Einbeziehung der Abmessungen (45) in Stapelrichtung der übereinander gestapelten Waren (2) der Istbestand an Waren (2) in diesen betreffenden Vorratsmagazinen (13) vom Rechnersystem errechnet werden und darauf folgend jeweils der Istbestand an Waren (2) mit dem Sollbestand für diese betreffenden Vorratsmagazine (13) verglichen werden und dass eine Bedarfsmeldung für eine Bedienperson zum Nachfüllen des betreffenden Vorratsmagazins (13) am Rechnersystem und/oder an einer Bedieneinheit (63) ausgegeben wird, wenn in einem der Vorratsmagazine (13) der Istbestand an Waren (2) den Sollbestand der für die eingegebenen Aufträge benötigten Waren (2) unterschreitet und/oder in Kürze unterschreiten wird.

25. Verfahren nach Anspruch 20 bis 24, **dadurch gekennzeichnet, dass** die Bedarfsmeldung optisch und/oder akustisch und/oder als Sprachinformation ausgegebenen wird.

26. Verfahren nach einem der Ansprüche 19 bis 24, **dadurch gekennzeichnet, dass** die Distanz (41) nur in jenem oder jenen Vorratsmagazinen (13) gemessen wird, in denen die für den oder die Aufträge oder die prognostizierte Absatzmenge bereitgestellten Waren (2) aufbewahrt sind und dass der erfasste Distanzwert vom betreffenden oder von den betreffenden Vorratsmagazinen (13) an das Rechnersystem oder eine Bedieneinheit (63) übermittelt wird.

27. Verfahren nach einem der Ansprüche 19 bis 24, **dadurch gekennzeichnet, dass** vom Stellwagen (32) nur jenes oder jene Vorratsmagazine (13) positioniert angefahren werden, in dem oder denen die für den oder die Aufträge oder die prognostizierte Absatzmenge bereitgestellten Waren (2) aufbewahrt sind und dass der erfasste Distanzwert vom betreffenden oder von den betreffenden Vorratsmagazinen (13) an das Rechnersystem oder eine Bedieneinheit (63) übermittelt wird.

28. Verfahren nach einem der Ansprüche 19 bis 24, **dadurch gekennzeichnet, dass** der Stellwagen (32) zwischen dem in dessen Verstellrichtung (46) ersten und letzten Vorratsmagazin (13) fortlaufend pendelnd hin und her verfahren und während seiner Verstellbewegung vom ersten Vorratsmagazin (13) zum letzten Vorratsmagazin (13) und/oder vom letzten Vorratsmagazin (13) zum ersten Vorratsmagazin (13), die Distanz (41) zur Ermittlung des Füllstandes (31) in jedem Vorratsmagazin (13) erfasst sowie der erfasste Distanzwert von jedem Vorratsmagazin (13) an das Rechnersystem oder eine Bedieneinheit (63) übermittelt wird.

29. Verfahren nach einem der Ansprüche 19 bis 24, **dadurch gekennzeichnet, dass** der Stellwagen (32) zwischen dem in dessen Verstellrichtung (46) ersten und letzten Vorratsmagazin (13) nach Zeitintervallen gesteuert pendelnd hin und her verfahren und während seiner Verstellbewegung vom ersten Vorratsmagazin (13) zum letzten Vorratsmagazin (13) und/ oder vom letzten Vorratsmagazin (13) zum ersten Vorratsmagazin (13) die Distanz (41) zur Ermittlung des Füllstandes (31) in jedem Vorratsmagazin (13) erfasst sowie der erfasste Distanzwert von jedem Vorratsmagazin (13) an das Rechnersystem oder eine Bedieneinheit (63) übermittelt wird.

## Claims

1. System (1) for dispensing stackable objects (2) in shaft-type dispenser magazines (13) of at least one storage unit (4) and monitoring the levels (31) in the dispenser magazines (13) by means of a detection system (30), which dispenser magazines (13) are disposed in the longitudinal direction of the storage unit (4) aligned one after the other in a row and each is formed by a guide section against certain regions of which the objects (2) stacked one on top of the other in a dispenser magazine (13) lie, and discharge mechanisms (21) controlled by a computer system are provided at the bottom end (20) of each of the dispenser magazines (13), and the detection system (30) is connected to the computer system, **characterised in that** the detection system (30) comprises at least one control carriage (32) disposed above the top end (38) of the dispenser magazines (13) which can be displaced by means of at least one drive system (37; 37') between the individual dispenser magazines (13) in the longitudinal direction of the storage unit (4) and which is provided with a measuring unit (33) for detecting the distance (41) between the uppermost object (2) lying the farthest away from the discharge mechanism (21) and a maximum, top level limit (42) of a dispenser magazine (13) in order to determine the level (31) of objects (2) in at least one of the dispenser magazines (13).

2. System as claimed in claim 1, **characterised in that** the control carriage (32) has at least one guide arrangement (35) by means of which it is guided on a guide track (36) extending in the longitudinal direction of the storage unit (4) and disposed adjacent to the top end (38) of the dispenser magazines (13).

3. System as claimed in claim 2, **characterised in that** the guide track (36) is provided in the form of at least one linear guide (36') and the control carriage (32) is mounted by means of the guide arrangement (35) on the linear guide (36'), and is mounted on a support frame (8) of the system (1) so that it can be displaced by means of the drive system (37; 37').

4. System as claimed in claim 1, **characterised in that** the drive system (37; 37') is provided in the form of a traction drive, friction gear drive, toothed gear-toothed rack drive or linear drive coupled with a drive motor (56; 60) and the drive motor (56; 60) is connected to a control system of the computer system.

5. System as claimed in claim 1, **characterised in that** the measuring unit (33) is provided in the form of a measuring system which detects the distance (41) without contact.

6. System as claimed in claim 5, **characterised in that** the measuring unit (33) is provided in the form of an optoelectronic measuring system, in particular a laser or infrared measuring system, and a scanning beam (39) of the measuring unit (33) extends essentially parallel with the longitudinal extension of the dispenser magazines (13) and essentially perpendicular to the discharge plane (24) of the discharge mechanism (21).

7. System as claimed in claim 5, **characterised in that** the measuring unit (33) is provided in the form of an ultrasound sensor and ultrasound waves of the measuring unit (33) extend essentially parallel with the longitudinal extension of the dispenser magazines (13) and essentially perpendicular to the discharge plane (24) of the discharge mechanism (21).

8. System as claimed in claim 1, **characterised in that** a positioning system (58) is provided for positioning and detecting the actual position of the control carriage (32) relative to the individual dispenser magazines (13).

9. System as claimed in claim 8, **characterised in that** the positioning system (58) comprises a distance measuring system or a position locating system for detecting the relative position of the control carriage (32) with respect to the individual dispenser magazines (13).

10. System as claimed in claims 4 and 9, **characterised in that** the drive motor (56; 60) incorporates the distance measuring system or the distance measuring system is disposed between the control carriage (32) and a support frame (8) of the system (1).

11. System as claimed in claim 9, **characterised in that** the position locating system is provided in the form of a navigation system, in particular GPS, comprising a transmitter and/or receiver unit disposed on the control carriage (32) and a transmitter and/ or receiver unit disposed in the frame region of the system (1).

12. System as claimed in claim 1, **characterised in that** a second storage unit (4') is disposed lying opposite the first storage unit (4) by reference to a vertical plane of symmetry (12), and the second storage unit (4') has shaft-type, elongate dispenser magazines (13) disposed in its longitudinal direction aligned one after the other in a row, and a discharge mechanism (21) is provided at the bottom end (20) of each dispenser magazine (13), and a conveyor system (3), in particular a belt conveyor, extends between the two storage units (4, 4') parallel with their longitudinal direction disposed at a slight distance underneath the bottom end (20) of the dispenser magazines (13) and a discharge direction of each discharge mechanism (21) extends transversely to the longitudinal direction of the conveyor system (3).

13. System as claimed in claim 12, **characterised in that** the storage units (4, 4') are disposed on both sides of the guide track (36), and the guide track (36) extends continuously, adjacent to and parallel with the top end (38) of the oppositely lying dispenser magazines (13) in the longitudinal direction of the storage units (4, 4') across the entire length of the system (1), and the control carriage (32) is provided with two respective measuring units (33) transversely offset from the guide track (36) in the direction of the storage units (4, 4') and disposed above the dispenser magazines (13) of the storage units (4, 4') for detecting the distance (41) in the relevant dispenser magazines (13) of the storage units (4, 4').

14. System as claimed in claim 12, **characterised in that** the dispenser magazines (13) of the storage units (4, 4') are inclined towards a horizontal conveyor plane of the conveyor system (3) and optionally also in the longitudinal direction of the conveyor system (3).

15. System as claimed in claims 1, 12 or 13, **characterised in that** the dispenser magazines (13) and the guide track (36) are mounted on a common support frame (8) of the system (1) and the guide section of the dispenser magazines (13) is of a U-shaped design and is open at its terminal ends (20, 38), and a base (15) faces the support frame (8) and parallel legs (16) projecting from the base (15) bound a slot-like object top-up opening (19).

16. System as claimed in claim 1, 5 to 7, **characterised in that** the at least one measuring unit (33) is connected to a control system of the computer system of a warehouse management system and/or a control unit (63).

17. System as claimed in one of claims 1 to 16, **characterised in that** each dispenser magazine (13) is provided with a control unit (63) comprising at least one input device (64) and/or output device (65) with an acoustic and/or optical output element, for example a signal horn and/or warning lamp and/or speech output module.

18. System as claimed in claim 1, **characterised in that** the at least one measuring unit (33) and the control system of the computer system of the warehouse management system and/or the control unit (63) and/or the drive system (37, 37'), in particular the controller of the drive motor (56; 60), are respectively provided with a transmitter and receiver unit for reciprocally transmitting data and/or signals wirelessly.

19. Method of dispensing stackable objects (2) in shaft-type dispenser magazines (13) of at least one storage unit (4) and monitoring the level (31) in the dispenser magazines (13) by means of a detection system (30), whereby the objects (2) are firstly stacked one on top of the other in shaft-type dispenser magazines (13) disposed one after the other in a row, after which they are dispensed individually by means of computer-controlled discharge mechanisms (21) disposed at the bottom end (20) of each of the dispenser magazines (13), **characterised in that** a control carriage (32) incorporating the detection system (30) is displaced in the longitudinal direction of the storage unit (4) above top ends (38) of the dispenser magazines (13) between the dispenser magazines (13) disposed one after the other in the displacement direction (46) of the control carriage (32), and as the control carriage (31) is being displaced, a distance (41) between the uppermost object (2) lying farthest away from the discharge mechanism (21) and a maximum, top level limit (42) of a dispenser magazine (13) is detected in at least one of the dispenser magazines (13) by means of at least one measuring unit (33) disposed on it and incorporating the detection system (30), after which the level (31) in this relevant dispenser magazine (13) is determined by the computer system.

20. Method as claimed in claim 19, **characterised in that**, firstly, at least one type of object (2) forming part of an order is electronically detected by the computer system in a known manner, after which a desired stock level of objects (2) needed in the relevant dispenser magazine (13) and corresponding to the order is calculated by the computer system, and then a distance (41) between the uppermost object (2) lying farthest away from the discharge mechanism (21) and a maximum, top level limit (42) of a dispenser magazine (13) is measured without contact in at least the one dispenser magazine (13) containing the objects (2) for this order, the current level (31) in this relevant dispenser magazine (13) is determined and, taking account of the dimensions (45) of the objects (2) stacked one on top of the other in the stacking direction, the actual stock level of objects (2) in this relevant dispenser magazine (13) is calculated by the computer system, after which the actual stock level of objects (2) is compared with the desired stock level for this relevant dispenser magazine (13) and a demand message is issued to an operator to top up the relevant dispenser magazine (13) at the computer system and/ or at a control unit (63) if the actual stock level of objects (2) falls short of the desired stock level of objects (2) needed for the order entered and/or will shortly fall short of it.

21. Method as claimed in claim 19, **characterised in that** firstly, a sales quantity predicted by the computer system for at least one type of object (2) within a set time window is electronically detected, after which a desired stock level of objects (2) needed in the relevant dispenser magazine (13) corresponding to the predicted sales quantity is calculated by the computer system, and then a distance (41) between the uppermost object (2) lying farthest away from the discharge mechanism (21) and a maximum, top level limit (42) of a dispenser magazine (13) is measured in this relevant dispenser magazine (13) without contact, the current level (31) in this relevant dispenser magazine (13) is determined and, taking account of the dimensions (45) of the objects (2) stacked one on top of the other in the stacking direction, the actual stock level of objects (2) in this relevant dispenser magazine (13) is calculated by the computer system, after which the actual stock level of objects (2) is compared with the desired stock level for this relevant dispenser magazine (13) and a demand message is issued to an operator to top up the relevant dispenser magazine (13) at the computer system and/or at a control unit (63) if the actual stock level of objects (2) falls short of the desired stock level of objects (2) needed for the predicted sales quantity and/or will shortly fall below it.

22. Method as claimed in claim 21, **characterised in that** a predicted sales quantity of several different objects (2) within a set time window is firstly electronically detected by the computer system, after which a desired stock level of objects (2) needed in the relevant dispenser magazines (13) corresponding to the predicted sales quantity is calculated by the computer system, and then a respective distance (41) between the uppermost object (2) lying farthest away from the discharge mechanism (21) and the maximum, top level limit (42) of a dispenser magazine (13) is determined in the relevant dispenser magazines (13) without contact, the respective current level (31) in the relevant dispenser magazines (13) is determined and, taking account of the dimensions (45) of the objects (2) stacked one on top of the other in the stacking direction, the actual stock level of objects (2) in these relevant dispenser magazines (13) is calculated by the computer system, after which the respective actual stock level of objects (2) is compared with the desired stock level for these relevant dispenser magazines (13) and a demand message is issued to an operator to top up the relevant dispenser magazines (13) at the computer system and/or at a control unit (63) if the actual stock level of objects (2) falls short of the different objects (2) needed for the predicted sales quantity and/or will shortly fall short of it.

23. Method as claimed in claim 20, **characterised in that** at least one order made up of several different objects (2) is firstly electronically detected by the computer system in a known manner, after which a desired stock level of objects (2) needed in the relevant dispenser magazines (13) corresponding to the order is calculated by the computer system, and then a distance (41) between the uppermost object (2) lying farthest away from the discharge mechanism (21) and a maximum, top level limit (42) of the dispenser magazines (13) is respectively measured without contact in at least the dispenser magazines (13) containing the objects (2) for the order, the current level (31) in these relevant dispenser magazines (13) is determined and, taking account of the dimensions (45) of the objects (2) stacked one on top of the other in the stacking direction, the actual stock level of objects (2) in these relevant dispenser magazines (13) is calculated by the computer system, after which the actual stock level of objects (2) is compared respectively with the desired stock level for these relevant dispenser magazines (13) and a demand message is issued to an operator to top up the relevant dispenser magazine (13) at the computer system and/or at a control unit (63) if the actual stock level of objects (2) in one of the dispenser magazines (13) falls short of the desired stock level of objects (2) needed for the order entered and/or will shortly fall short of it.

24. Method as claimed in claim 20, **characterised in that** once the first order and at least one other order has been electronically detected by the computer system, a desired stock level of objects (2) needed in the relevant dispenser magazines (13) corresponding to the orders is calculated by the computer system, and then a distance (41) between the uppermost object (2) lying farthest away from the discharge mechanism (21) and a maximum, top level limit (42) of the dispenser magazines (13) is measured without contact respectively in at least the dispenser magazines (13) containing the objects (2) for the orders, the respective current level (31) in these relevant dispenser magazines (13) is determined and, taking account of the dimensions (45) of the objects (2) stacked one on top of the other in the stacking direction, the actual stock level of objects (2) in these relevant dispenser magazines (13) is calculated by the computer system, after which the actual stock level of objects (2) is compared with the desired stock level for these relevant dispenser magazines (13) and a demand message is issued to an operator to top up the relevant dispenser magazine (13) at the computer system and/or at a control unit (63) if the actual stock level of objects (2) in one of the dispenser magazines (13) falls short of the desired stock level of objects (2) needed for the orders entered and/or will shortly fall below it.

25. Method as claimed in claims 20 to 24, **characterised in that** the demand message is output optically and/or acoustically and/or as a speech message.

26. Method as claimed in one of claims 19 to 24, **characterised in that** the distance (41) is measured only **in that** or those dispenser magazines (13) used to store and dispense the objects (2) sorted into consignments for the order or orders or for the predicted sales quantity, and the detected distance value of the relevant dispenser magazine or magazines (13) is transmitted to the computer system or a control unit (63).

27. Method as claimed in one of claims 19 to 24, **characterised in that** the control carriage (32) approaches and is positioned at only that or those dispenser magazines (13) in which the objects (2) for the order or orders or the predicted sales quantity are stored and dispensed, and the detected distance value of the relevant dispenser magazine or magazines (13) is transmitted to the computer system or a control unit (63).

28. Method as claimed in one of claims 19 to 24, **characterised in that** the control carriage (32) is moved continuously backwards and forwards in a pendulum motion between the first and last dispenser magazine (13) in its displacement direction (46) and the distance (41) for determining the level (31) is detected in each dispenser magazine (13) during its displacement from the first dispenser magazine (13) to the last dispenser magazine (13) and/or from the last dispenser magazine (13) to the first dispenser magazine (13), and the detected distance value of each dispenser magazine (13) is transmitted to the computer system or to a control unit (63).

29. Method as claimed in one of claims 19 to 24, **characterised in that** the control carriage (32) is moved backwards and forwards in a pendulum motion between the first and last dispenser magazine (13) in its displacement direction (46) at controlled time intervals and the distance (41) for determining the level (31) is detected in each dispenser magazine (13) during its displacement from the first dispenser magazine (13) to the last dispenser magazine (13) and/or from the last dispenser magazine (13) to the first dispenser magazine (13), and the detected distance value of each dispenser magazine (13) is transmitted to the computer system or to a control unit (63).

## Revendications

1. Dispositif (1) d'approvisionnement de produits empilables (2) dans des magasins de stockage (13) en forme de puits d'au moins un dispositif de stockage (4) et surveillance du niveau de remplissage (31) dans les magasins de stockage (13) au moyen d'un dispositif de saisie (30), lesquels magasins de stockage (13) sont disposés dans la direction longitudinale du dispositif de stockage (4) dans une rangée, alignés les uns derrière les autres, et sont formés respectivement par un profilé de guidage, contre lequel les produits (2) empilés les uns au-dessus des autres dans un magasin de stockage (13) reposent par zones, et à l'extrémité inférieure (20) de chaque magasin de stockage (13) sont prévus des dispositifs de déstockage (21) commandés par un système d'ordinateur et le dispositif de saisie (30) est relié au système d'ordinateur, **caractérisé en ce que** le dispositif de saisie (30) comporte au moins un chariot de positionnement (32) disposé au-dessus de l'extrémité supérieure (38) des magasins de stockage (13) et mobile entre les différents magasins de stockage (13) dans la direction longitudinale du dispositif de stockage (4) par l'intermédiaire d'au moins un dispositif d'entraînement (37; 37'), chariot qui est doté d'au moins un dispositif de mesure (33) qui saisit la distance (41) entre le produit (2) le plus en haut, se trouvant le plus loin du dispositif de déstockage (21) et une limitation de remplissage (42) maximale supérieure d'un magasin de stockage (13) pour la détermination du niveau de remplissage (31) des produits (2) dans au moins un des magasins de stockage (13).

2. Dispositif selon la revendication 1, **caractérisé en ce que** le chariot de positionnement (32) comporte au moins un dispositif de guidage (35), avec lequel il est guidé sur une piste de guidage (36) s'étendant dans la direction longitudinale du dispositif de stockage (4) et disposée au voisinage de l'extrémité supérieure (38) des magasins de stockage (13).

3. Dispositif selon la revendication 2, **caractérisé en ce que** la piste de guidage (36) est formée par au moins un guide linéaire (36') et **en ce que** le chariot de positionnement (32) est monté par l'intermédiaire du dispositif de guidage (35) sur le guide linéaire (36') et est disposé réglable par l'intermédiaire du dispositif d'entraînement (37; 37') sur un cadre support (8) du dispositif (1).

4. Dispositif selon la revendication 1, **caractérisé en ce que** le dispositif d'entraînement (37; 37') est formé par un entraînement à tirants, un entraînement à galet de friction, en entraînement à pignon et crémaillère ou un entraînement linéaire accouplés à un moteur d'entraînement (56; 60), et **en ce que** le moteur d'entraînement (56; 60) est relié à une unité de commande du système d'ordinateur.

5. Dispositif selon la revendication 2, **caractérisé en ce que** le dispositif de mesure (33) est formé par un système de mesure qui saisit la distance (41) sans contact.

6. Dispositif selon la revendication 5, **caractérisé en ce que** le dispositif de mesure (33) est formé par un système de mesure opto-électronique, en particulier un système de mesure à laser ou à infrarouge et **en ce qu'**un faisceau de palpage (39) du dispositif de mesure (33) s'étend sensiblement parallèlement à l'extension longitudinale des magasins de stockage (13) et sensiblement perpendiculairement au plan de déstockage (24) du dispositif de déstockage (21).

7. Dispositif selon la revendication 5, **caractérisé en ce que** le dispositif de mesure (33) est formé par un capteur à ultrasons et **en ce que** les ondes ultrasonores du dispositif de mesure (33) se propagent sensiblement parallèlement à l'extension longitudinale des magasins de stockage (13) et sensiblement perpendiculairement au plan de déstockage (24) du dispositif de déstockage (21).

8. Dispositif selon la revendication 1, **caractérisé en ce qu'**un système de positionnement (58) pour le positionnement et la saisie de la position réelle du chariot de positionnement (32) par rapport aux différents magasins de stockage (13) est prévu.

9. Dispositif selon la revendication 8, **caractérisé en ce que** le système de positionnement (58) comporte un dispositif de mesure de déplacement ou un système de localisation pour la saisie de la position relative du chariot de positionnement (32) par rapport aux différents magasins de stockage (13).

10. Dispositif selon les revendications 4 et 9, **caractérisé en ce que** le moteur d'entraînement (56; 60) comporte le dispositif de mesure du déplacement et que le dispositif de mesure du déplacement est disposé entre le chariot de positionnement (32) et un cadre support (8) du dispositif (1).

11. Dispositif selon la revendication 9, **caractérisé en ce que** le système de localisation est formé par un dispositif de navigation, en particulier GPS, consistant en un dispositif émetteur et/ou récepteur, disposé sur le chariot de positionnement (32) et un dispositif émetteur et/ou récepteur disposé dans la zone d'installation du dispositif (1).

12. Dispositif selon la revendication 1, **caractérisé en ce qu'**un deuxième dispositif de stockage (4') est disposé en face du premier dispositif de stockage (4) par rapport à un plan de symétrie vertical (12), sachant que le deuxième dispositif de stockage (4'), comporte des magasins de stockage (13) en forme de puits, allongés, disposés dans sa direction longitudinale, alignés à fleur dans une rangée, et qu'à l'extrémité inférieure (20) de chacun des magasins de stockage (13), est prévu un dispositif de déstockage (21), et qu'un dispositif de transport (3) disposé légèrement en dessous de l'extrémité inférieure (20) des magasins de stockage (13), en particulier un convoyeur à bande, s'étend entre les deux dispositifs de stockage (4, 4'), parallèlement à leur direction longitudinale, sachant qu'un dispositif de déstockage de chaque dispositif de déstockage (21) s'étend transversalement par rapport à la direction longitudinale du dispositif de transport (3).

13. Dispositif selon la revendication 12, **caractérisé en ce que** les dispositifs de stockage (4, 4') sont disposés des deux côtés de la piste de guidage (36), sachant que la piste de guidage (36) s'étend continûment de façon contiguë à l'extrémité supérieure (38) des magasins de stockage (13) se trouvant face à face, parallèlement dans la direction longitudinale aux dispositifs de stockage (4, 4') sur l'ensemble de la longueur du dispositif (1), et **en ce que** le chariot de positionnement (32) est doté de deux dispositifs de mesure (33) décalés respectivement transversalement par rapport à la piste de guidage (36) en direction des dispositifs de stockage (4, 4') et disposés au-dessus des magasins de stockage (13) des dispositifs de stockage (4, 4'), pour la saisie de la distance (41) dans les magasins de stockage (13) correspondants des dispositifs de stockage (4, 4').

14. Dispositif selon la revendication 12, **caractérisé en ce que** les magasins de stockage (13) des dispositifs de stockage (4, 4') sont inclinés en direction d'un plan de transport horizontal du dispositif de transport (3) et le cas échéant aussi dans la direction longitudinale du dispositif de transport (3).

15. Dispositif selon la revendication 1, 12 ou 13, **caractérisé en ce que** les magasins de stockage (13) et la piste de guidage (36) sont fixés sur un cadre support (8) commun du dispositif (1) et **en ce que** le profilé de guidage des magasins de stockage (13) est configuré en forme de U et est ouvert aux extrémités frontales (20, 38), sachant qu'une base (15) est tournée vers le cadre support (8) et que des branches (16) parallèles dépassant depuis la base (15), limitent une ouverture de remplissage en produit (19).

16. Dispositif selon les revendications 1 et 5 à 7, **caractérisé en ce que** ledit au moins un dispositif de mesure (33) est relié à une unité de commande du système d'ordinateur d'un système de gestion de stocks et/ou à une unité de manipulation (63).

17. Dispositif selon l'une quelconque des revendications 1 à 16, **caractérisé en ce que** par magasin de stockage (13), il est prévu une unité de manipulation (63) qui comporte au moins un dispositif d'entrée (64) et/ou un dispositif de sortie (65) avec un élément de sortie acoustique et/ou optique, par exemple un avertisseur acoustique et/ou une lampe de signalisation, et/ou un module de sortie vocale.

18. Dispositif selon la revendication 1, **caractérisé en ce que** ledit au moins un dispositif de mesure (33) et l'unité de commande du système d'ordinateur du système de gestion des stocks et/ou l'unité de manipulation (63) et/ou le dispositif d'entraînement (37; 37'), en particulier la commande du moteur d'entraînement (56; 60), sont dotés chacun d'une unité d'émission et de réception pour la transmission réciproque sans fil de données ou de signaux.

19. Procédé d'approvisionnement de produits empilables (2) dans des magasins de stockage (13) en forme de puits d'au moins un dispositif de stockage (4) et surveillance du niveau de remplissage (31) dans les magasins de stockage (13) au moyen d'un dispositif de saisie (30), dans lequel les produits (2) sont tout d'abord empilés les uns au-dessus des autres dans les magasins de stockage (13) en forme de puits disposés les uns derrière les autres en une rangée, et sont ensuite sortis un à un par l'intermédiaire de dispositifs de déstockage (21) disposés à l'extrémité inférieure (20) de chaque magasin de stockage (13), commandés par un système d'ordinateur, **caractérisé en ce qu'**un chariot de positionnement (32) comportant le dispositif de saisie (30) est déplacé dans la direction longitudinale du dispositif de stockage (4) au-dessus de l'extrémité supérieure (38) des magasins de stockage (13) entre les magasins de stockage (13) se suivant les uns les autres dans la direction de déplacement (46) du chariot de positionnement (32), et **en ce que** pendant le mouvement de déplacement du chariot de positionnement (32), une distance (41) entre le produit (2) le plus en haut, se trouvant le plus loin du dispositif de déstockage (21) et une limitation de remplissage (42) maximale supérieure d'un magasin de stockage (13) est saisie par au moins un dispositif de mesure (33) disposé sur celui-ci, comportant le dispositif de saisie (30), au moins dans un des magasins de stockage (13), et **en ce que** le niveau de remplissage (31) dans ce magasin de stockage (13) concerné est ensuite déterminé par le système d'ordinateur.

20. Procédé selon la revendication 19, **caractérisé en ce que** tout d'abord, de la manière connue en soi, au moins une commande comprenant au moins une sorte de produit (2) est saisie électroniquement par le système d'ordinateur, sur quoi, en fonction de la commande, un stock de consigne nécessité des produits (2) dans le magasin de stockage (13) concerné est calculé par le système d'ordinateur, **en ce qu'**ensuite, dans au moins l'un magasin de stockage (13) contenant le produit (2) pour cette commande, une distance (41) entre le produit (2) le plus en haut, se trouvant le plus loin du dispositif de déstockage (21) et une limitation de remplissage (42) maximale supérieure d'un magasin de stockage (13) est mesurée par une méthode sans contact, **en ce que** le niveau de remplissage (31) actuel dans ce magasin de stockage (13) considéré est déterminé et **en ce que**, moyennant la prise en compte des dimensions (45) dans la direction d'empilage des produit (2) empilés les uns au-dessus des autres, les stocks réels du produit (2) dans ce magasin de stockage (13) concerné sont calculés par le système d'ordinateur et, à la suite de cela, les stocks réels de produit (2) sont comparés aux stocks de consigne pour ce magasin de stockage (13) concerné et un message de besoins pour un opérateur en vue de l'appoint dans le magasin de stockage (13) concerné est sorti sur le système d'ordinateur et/ou sur l'unité de manipulation (63), quand les stocks réels de produit (2) dépassent par valeur inférieure les stocks de consigne de produit (2) nécessités pour la commande entrante et/ou seront dépassés par valeur inférieure sous peu.

21. Procédé selon la revendication 19, **caractérisé en ce que** tout d'abord une quantité d'au moins une sorte de produit (2) à écouler à l'intérieur d'une fenêtre de temps définie, pronostiquée par le système d'ordinateur est saisie électroniquement, sur quoi, en fonction de la quantité à écouler pronostiquée, un stock nécessité des produits (2) dans le magasin de stockage (13) concerné est calculé par le système d'ordinateur, **en ce qu'**ensuite, une distance (41) entre le produit (2) le plus en haut, se trouvant le plus loin du dispositif de déstockage (21) et une limitation de remplissage (42) maximale supérieure d'un magasin de stockage (13) est mesurée dans ce magasin de stockage (13) concerné par une méthode sans contact, **en ce que** le niveau de remplissage (31) actuel dans ce magasin de stockage (13) considéré est déterminé et, moyennant la prise en compte des dimensions (45) dans la direction d'empilage des produits (2) empilés les uns au-dessus des autres, **en ce que** les stocks réels du produit (2) dans ce magasin de stockage (13) concerné sont calculés par le système d'ordinateur et, à la suite de cela, **en ce que** les stocks réels de produit (2) sont comparés aux stocks de consigne pour ce magasin de stockage (13) concerné et **en ce qu'**un message de besoins pour un opérateur en vue de l'appoint dans le magasin de stockage (13) concerné est sorti sur le système d'ordinateur et/ou sur une unité de manipulation (63), quand les stocks réels de produit (2) dépassent par valeur inférieure les stocks de consigne de produit (2) nécessités pour la quantité à écouler pronostiquée et/ou seront dépassés par valeur inférieure sous peu.

22. Procédé selon la revendication 21, **caractérisé en ce que** tout d'abord une quantité pronostiquée par le système d'ordinateur de plusieurs produits (2) différents à écouler à l'intérieur d'une fenêtre de temps définie est saisie électroniquement, sur quoi, en fonction de la quantité à écouler pronostiquée, un stock nécessité des produits (2) dans les magasins de stockage (13) concernés est calculé par le système d'ordinateur, **en ce qu'**ensuite, dans chacune de ces magasins de stockage (13) concernés, une distance (41) entre le produit (2) le plus en haut, se trouvant le plus loin du dispositif de déstockage (21) et une limitation de remplissage (42) maximale supérieure d'un magasin de stockage (13) est mesurée par une méthode sans contact, **en ce que** le niveau de remplissage (31) actuel dans chacun des magasins de stockage (13) considérés est déterminé et, moyennant la prise en compte des dimensions (45) dans la direction d'empilage des produits (2) empilés les uns au-dessus des autres, **en ce que** les stocks réels du produit (2) dans ces magasins de stockage (13) concernés sont calculées par le système d'ordinateur et, à la suite de cela, **en ce que** les stocks respectifs réels des produits (2) sont comparés aux stocks de consigne pour ces magasins de stockage (13) concernés et **en ce qu'**un message de besoins pour un opérateur en vue de l'appoint dans le magasin de stockage (13) concerné est sorti sur le système d'ordinateur et/ou sur une unité de manipulation (63), quand les stocks réels de produits (2) dépassent par valeur inférieure les stocks de consigne des différents produits (2), nécessités pour la quantité à écouler pronostiquée et/ou seront dépassés par valeur inférieure sous peu.

23. Procédé selon la revendication 20, **caractérisé en ce que** tout d'abord de la façon connue en soi, au moins une commande englobant plusieurs produits (2) est appréhendée électroniquement par le système d'ordinateur, sur quoi, en fonction de la commande, un stock de consigne nécessité des produits (2) dans les magasins de stockage (13) concernés est calculé par le système d'ordinateur, **en ce qu'**ensuite, au moins dans chacun des magasins de stockage (13) contenant les produits (2) pour cette commande, une distance (41) entre le produit (2) le plus en haut, se trouvant le plus loin du dispositif de déstockage (21) et une limitation de remplissage (42) maximale supérieure des magasins de stockage (13) est mesurée par une méthode sans contact, **en ce que** le niveau de remplissage (31) actuel dans chacun de ces magasins de stockage (13) considérés est déterminé et **en ce que**, moyennant la prise en compte des dimensions (45) dans la direction d'empilage des produits (2) empilés les uns au-dessus des autres, les stocks réels des produits (2) dans ces magasins de stockage (13) concernés sont calculées par le système d'ordinateur et, à la suite de cela, **en ce que** les stocks respectifs réels des produits (2) sont comparés aux stocks de consigne pour ces magasins de stockage (13) concernés et **en ce qu'**un message de besoins pour un opérateur en vue de l'appoint dans le magasin de stockage (13) concerné est sorti sur le système d'ordinateur et/ou sur une unité de manipulation (63) quand, dans un des magasins de stockage (13), le stock réel des produits (2) dépasse par valeur inférieure le stock de consigne des produits (2), nécessité pour la commande entrée, et/ou sera dépassé par valeur inférieure sous peu.

24. Procédé selon la revendication 20, **caractérisé en ce que**, après la saisie électronique de la première commande et d'au moins une autre commande, un stock de consigne nécessité des produits (2) dans les magasins de stockage (13) concernés est calculé par le système d'ordinateur en fonction des commandes, **en ce qu'**ensuite, au moins dans chacun des magasins de stockage (13) contenant les produits (2) pour ces commandes, une distance (41) entre le produit (2) le plus en haut, se trouvant le plus loin du dispositif de déstockage (21) et une limitation de remplissage (42) maximale supérieure des magasins de stockage (13) est mesurée par une méthode sans contact, **en ce que** le niveau de remplissage (31) actuel dans chacun de ces magasins de stockage (13) considérés est déterminé et, moyennant la prise en compte des dimensions (45) dans la direction d'empilage des produits (2) empilés les uns au-dessus des autres, **en ce que** les stocks réels des produits (2) dans ces magasins de stockage (13) concernés sont calculées par le système d'ordinateur et, à la suite de cela, **en ce que** les stocks respectifs réels des produits (2) sont comparés aux stocks de consigne pour ces magasins de stockage (13) concernés et **en ce qu'**un message de besoins pour un opérateur en vue de l'appoint dans le magasin de stockage (13) concerné est sorti sur le système d'ordinateur et/ou sur une unité de manipulation (63) quand, dans un des magasins de stockage (13), le stock réel des produits (2) dépasse par valeur inférieure le stocks de consigne des produits (2), nécessités pour les commandes entrées et/ou sera dépassé par valeur inférieure sous peu.

25. Procédé selon les revendications 20 à 24, **caractérisé en ce que** le message de besoin est sorti optiquement et/ou acoustiquement et/ou comme information vocale.

26. Procédé selon l'une quelconque des revendications 19 à 24, **caractérisé en ce que** la distance (41) n'est mesurée que sur celui ou ceux des magasins de stockage (13) dans lesquels les produits (2) mis à disposition pour la ou les commande ou pour la quantité à écouler pronostiquée sont conservés et **en ce que** la valeur de distance saisie du ou des magasins de stockage (13) concernés est communiquée au système d'ordinateur ou à une unité de manipulation (63).

27. Procédé selon l'une quelconque des revendications 19 à 24, **caractérisé en ce que** seuls celui-là ou ceux-là des magasins de stockage (13) dans lequel ou lesquels sont conservés les produits (2) mis à disposition pour la ou les commandes ou pour la quantité à débiter pronostiquée sont abordés de façon positionnée par le chariot de positionnement (32), et **en ce que** la valeur de distance saisie du ou des magasins de stockage (13) concernés est communiquée au système d'ordinateur ou à une unité de manipulation (63).

28. Procédé selon l'une quelconque des revendications 19 à 24, **caractérisé en ce que** le chariot de positionnement (32) est constamment déplacé pendulairement dans sa direction de déplacement (46) dans un sens et dans l'autre entre le premier et le dernier magasin de stockage (13) et **en ce que**, pendant son mouvement de déplacement du premier magasin de stockage (13) au dernier magasin de stockage (13) et/ou du dernier magasin de stockage (13) au premier magasin de stockage (13), il saisit la distance (41) pour la détermination du niveau de remplissage (31) dans chaque magasin de stockage (13), et **en ce que** la valeur de distance saisie de chaque magasin de stockage (13) est communiquée au système d'ordinateur ou à une unité de manipulation (63).

29. Procédé selon l'une quelconque des revendications 19 à 24, **caractérisé en ce que** le chariot de positionnement (32) est déplacé pendulairement, selon des intervalles de temps, dans sa direction de déplacement (46) dans un sens et dans l'autre entre le premier et le dernier magasin de stockage (13) et **en ce que**, pendant son mouvement de déplacement du premier magasin de stockage (13) au dernier magasin de stockage (13) et/ou du dernier magasin de stockage (13) au premier magasin de stockage (13), il saisit la distance (41) pour la détermination du niveau de remplissage (31) dans chaque magasin de stockage (13), et **en ce que** la valeur de distance saisie de chaque magasin de stockage (13) est communiquée au système d'ordinateur ou à une unité de manipulation (63).
